# EUROPEAN PATENT SPECIFICATION

(11) **EP 4 605 459 B1**
(45) Date of publication and mention of the grant of the patent: **02.12.2026**
(21) Application number: 22809585.7
(22) Date of filing: 21.10.2022
(51) Int. Cl.: C08K 5/00, C08K 5/5317

(54) **POLYMER COMPOSITIONS COMPRISING A SALT OF CYCLOPENTYLPHOSPHONIC ACID AND ARTICLES MADE FROM SUCH POLYMER COMPOSITIONS**
POLYMERZUSAMMENSETZUNGEN MIT EINEM SALZ VON CYCLOPENTYLPHOSPHONSÄURE UND DARAUS HERGESTELLTE ARTIKEL
COMPOSITIONS POLYMÈRES COMPRENANT UN SEL D'ACIDE CYCLOPENTYLPHOSPHONIQUE ET ARTICLES FABRIQUÉS À PARTIR DE TELLES COMPOSITIONS POLYMÈRES

(43) Date of publication of application: 27.08.2025
(73) Proprietor: Milliken & Company, Spartanburg, South Carolina 29303 (US)
(72) Inventor: DOTSON, Darin L., Spartanburg, South Carolina 29303 (US); XU, Xiaoyou, Spartanburg, South Carolina 29303 (US)
(74) Representative: Elkington and Fife LLP
(86) International application number: PCT/US2022/047434
(87) International publication number: WO 2024/085884

(56) References cited:
- WO-A1-2010/126559
- WO-A1-2016/014113
- WO-A1-2019/030251

## Description

### TECHNICAL FIELD OF THE INVENTION

This application relates to polymer compositions, such as polypropylene polymer compositions or polyethylene polymer compositions, containing a salt of cyclopentylphosphonic acid and articles (e.g., injection molded articles) made from such polymer compositions. The salt of cyclopentylphosphonic acid is believed to serve as a nucleating agent for the polymer.

### BACKGROUND

Polyolefins are a group of polymer resins that are particularly versatile. Polyolefins are semicrystalline polymers. A polyolefin which has been allowed to cool relatively slowly (e.g., such as the cooling that takes place during the production of molded plastic parts) contains amorphous regions in which the polymer chains are randomly arranged and crystalline regions in which the polymer chains have assumed an orderly configuration. Within these crystalline regions of the polyolefin, the polymer chains align into domains commonly referred to as "crystalline lamellae." Under normal processing conditions, the crystalline lamellae grow radially in all directions as the polyolefin polymer cools from the molten state. This radial growth results in the formation of spherulites, which are spherical semicrystalline regions composed of multiple crystalline lamellae interrupted by amorphous regions. The size of the spherulites is affected by several parameters and can range from hundreds of nanometers to millimeters in diameter. When the spherulite size is appreciably larger than the wavelength of visible light, the spherulites will scatter visible light passing through the polymer. This scattering of visible light results in a hazy appearance which is commonly referred to as "polymer haze" or simply "haze." While appreciable levels of polymer haze may be acceptable in some applications, there are certain applications (e.g., storage containers) in which consumers desire relatively transparent plastics, which requires correspondingly low haze levels.

Several nucleating agents for thermoplastic polymers are known in the art. These nucleating agents generally function by forming nuclei or providing sites for the formation and/or growth of crystals in the thermoplastic polymer as it solidifies from a molten state. The nuclei or sites provided by the nucleating agent allow the crystals to form within the cooling polymer at a higher temperature and/or at a more rapid rate than the crystals will form in the virgin, non-nucleated thermoplastic polymer. These effects can then permit processing of a nucleated thermoplastic polymer composition at cycle times that are shorter than the virgin, non-nucleated thermoplastic polymer.

Some nucleating agents are able to reduce the spherulite size of certain polymers (e.g., polypropylene and polyethylene) to such an extent that the polymer haze is appreciably and noticeably reduced (i.e., the scattering of visible light passing though the polymer is reduced). Such nucleating agents are very beneficial because they enable the polymer to be used in applications where lower haze levels are required or at least desired.

In addition to such improvements in optical properties, it is often desirable for the nucleating agent to increase the speed at which the polymer crystallizes (e.g., reduce the crystallization half-time of the polymer). Faster crystallization rates can reduce cycle time, thereby increasing process throughput. Rapid crystallization rates are especially desirable in processes that produce relatively thin parts or articles (e.g., thickness of about 30 mils [0.762 mm] or less). When thin parts/articles are made, they cool rapidly due to their low mass and high surface area. Since nucleation only occurs when the polymer is molten, a nucleating agent that induces rapid crystallization rates will more effectively and completely nucleate the polymer from which the thin parts/articles are made.

In view of the above, a need therefore remains for nucleating agents for thermoplastic polymers, such as polypropylene and polyethylene, that provide a desirable combination of, for example, low haze and high crystallization rates (e.g., low polymer crystallization half-times). The additives and polymer compositions described herein are intended to address such need.

### BRIEF SUMMARY OF THE INVENTION

In a first embodiment, the invention provides a polymer composition comprising: (a) a polyolefin polymer; and (b) a salt of cyclopentylphosphonic acid.

### DETAILED DESCRIPTION OF THE INVENTION

In a first embodiment, the invention provides a polymer composition comprising: (a) a polyolefin polymer; and (b) a salt of cyclopentylphosphonic acid.

The polymer composition can comprise any suitable polyolefin polymer. Suitable polyolefins include, but are not limited to, a polypropylene, a polyethylene, a polybutylene, a poly(4-methyl-1-pentene), and combinations or mixtures thereof. In a preferred embodiment, the polyolefin polymer is selected from the group consisting of polypropylene polymers, polyethylene polymers, and mixtures thereof. In one preferred embodiment, the polyolefin polymer is a polypropylene polymer. In another preferred embodiment, the polyolefin polymer is a polyethylene polymer.

The polymer composition can comprise any suitable polypropylene polymer. In a preferred embodiment, the polypropylene polymer is selected from the group consisting of polypropylene homopolymers (e.g., atactic polypropylene homopolymer, isotactic polypropylene homopolymer, and syndiotactic polypropylene homopolymer), polypropylene copolymers (e.g., polypropylene random copolymers), polypropylene impact copolymers, and mixtures thereof. Suitable polypropylene copolymers include, but are not limited to, random copolymers made from the polymerization of propylene in the presence of a comonomer selected from the group consisting of ethylene, but-1-ene (i.e., 1-butene), and hex-1-ene (i.e., 1-hexene), with ethylene being particularly preferred. In such polypropylene random copolymers, the comonomer can be present in any suitable amount, but typically is present in an amount of less than about 10 wt.% (e.g., about 0.5 wt.% to about 10 wt.%, about 1 wt.% to about 7 wt.%, or about 0.5 wt.% to about 4 wt.%). Suitable polypropylene impact copolymers include, but are not limited to, those produced by the addition of a copolymer selected from the group consisting of ethylene-propylene rubber (EPR), ethylenepropylene-diene monomer (EPDM), polyethylene, and plastomers to a polypropylene homopolymer or polypropylene random copolymer. In such polypropylene impact copolymers, the copolymer can be present in any suitable amount, but typically is present in an amount of from about 5 to about 25 wt.%. Suitable polypropylene impact copolymers also include, but are not limited to, copolymers made by the polymerization of propylene and ethylene using one or more Zeigler Natta catalysts. Such polypropylene impact copolymers generally have a heterophasic structure in which an amorphous ethylene-propylene copolymer is dispersed in a semi-crystalline polypropylene homopolymer or polypropylene copolymer (e.g., polypropylene random copolymer) matrix. Suitable polypropylene impact copolymers may be characterized by a continuous phase comprising polypropylene polymers selected from polypropylene homopolymers and copolymers of propylene and up to 50 wt.% of ethylene and/or C₄-C₁₀ α-olefins and a discontinuous phase comprising elastomeric ethylene polymers selected from ethylene / C₃-C₁₀ α-olefin monomers and the ethylene polymers have an ethylene content of from 8 to 90 wt.%. In various embodiments of the invention where the polyolefin polymer is a polypropylene impact copolymer, (i) the ethylene content of the discontinuous phase may be from 8 to 80 wt.% (based on the weight of the discontinuous phase), (ii) the ethylene content of the heterophasic composition may be from 5 to 30 wt.%, based on the total weight of the impact copolymer; (iii) the propylene content of the continuous phase may be 80 wt.% or greater (based on the weight of the continuous phase) and/or (iv) the discontinuous phase may be from 5 to 35 wt.% of the total weight of the impact copolymer. The polypropylene polymers described above can be branched or cross-linked, such as the branching or cross-linking that results from the addition of additives that increase the melt strength of the polymer.

As noted above, the polymer composition can comprise a polyethylene polymer. The polymer composition can comprise one polyethylene polymer or a mixture of two or more different polyethylene polymers, and the term "polyethylene polymer composition" will be used herein to broadly refer to a composition containing one polyethylene polymer or a mixture of two or more different polyethylene polymers. Suitable polyethylene polymers include, but are not limited to, low-density polyethylene, linear low-density polyethylene, medium-density polyethylene, high-density polyethylene, and combinations thereof. In certain preferred embodiments, the thermoplastic polymer is selected from the group consisting of linear low-density polyethylene, high-density polyethylene, and mixtures thereof. In another preferred embodiment, the thermoplastic polymer is a high-density polyethylene.

The high-density polyethylene polymers suitable for use in the invention generally have a density of greater than 930 kg/m³ (e.g., greater than 940 kg/m³, 941 kg/m³ or more, 950 kg/m³ or more, or 955 kg/m³ or more). There is no upper limit to the suitable density of the polymer, but high-density polyethylene polymers typically have a density that is less than 980 kg/m³ (e.g., less than 975 kg/m³ or less than 970 kg/m³). Thus, in a preferred embodiment, the high-density polyethylene polymer has a density of 930 kg/m³ to 980 kg/m³ (e.g., 940 kg/m³ to 980 kg/m³, 941 kg/m³ to 980 kg/m³, 950 kg/m³ to 980 kg/m³, or 955 kg/m³ to 980 kg/m³), 930 kg/m³ to 975 kg/m³ (e.g., 940 kg/m³ to 975 kg/m³, 941 kg/m³ to 975 kg/m³, 950 kg/m³ to 975 kg/m³, or 955 kg/m³ to 975 kg/m³), or 930 to 970 kg/m³ (e.g., 940 kg/m³ to 970 kg/m³, 941 kg/m³ to 970 kg/m³, 950 kg/m³ to 970 kg/m³, or 955 kg/m³ to 970 kg/m³).

The high-density polyethylene polymers suitable for use in the invention can be either homopolymers or copolymers of ethylene with one or more α-olefins. Suitable α-olefins include, but are not limited to, 1-butene, 1-hexene, 1-octene, 1-decene, and 4-methyl-1-pentene. The comonomer can be present in the copolymer in any suitable amount, such as an amount of about 5% by weight or less (e.g., about 3 mol.% or less). As will be understood by those of ordinary skill in the art, the amount of comonomer suitable for the copolymer is largely driven by the end use for the copolymer and the required or desired polymer properties dictated by that end use.

The high-density polyethylene polymers suitable for use in the invention can be produced by any suitable process. For example, the polymers can be produced by a free radical process using very high pressures as described, for example, in U.S. Patent No. 2,816,883 (Larchar et al.), but the polymers typically are produced in a "low pressure" catalytic process. In this context, the term "low pressure" is used to denote processes carried out at pressures less than 6.9 MPa (e.g., 1,000 psig), such as 1.4-6.9 MPa (200-1,000 psig). Examples of suitable low pressure catalytic processes include, but are not limited to, solution polymerization processes (i.e., processes in which the polymerization is performed using a solvent for the polymer), slurry polymerization processes (i.e., processes in which the polymerization is performed using a hydrocarbon liquid in which the polymer does not dissolve or swell), gas-phase polymerization processes (e.g., processes in which the polymerization is performed without the use of a liquid medium or diluent), or a staged reactor polymerization process. The suitable gas-phase polymerization processes also include the so-called "condensed mode" or "super-condensed mode" processes in which a liquid hydrocarbon is introduced into the fluidized-bed to increase the absorption of the heat producing during the polymerization process. In these condensed mode and super-condensed mode processes, the liquid hydrocarbon typically is condensed in the recycle stream and reused in the reactor. The staged reactor processes can utilize a combination of slurry process reactors (tanks or loops) that are connected in series, parallel, or a combination of series or parallel so that the catalyst (e.g., chromium catalyst) is exposed to more than one set of reaction conditions. Staged reactor processes can also be carried out by combining two loops in series, combining one or more tanks and loops in series, using multiple gas-phase reactors in series, or a loop-gas phase arrangement. Because of their ability to expose the catalyst to different sets of reactor conditions, staged reactor processes are often used to produce multimodal polymers, such as those discussed below. Suitable processes also include those in which a pre-polymerization step is performed. In this pre-polymerization step, the catalyst typically is exposed to the cocatalyst and ethylene under mild conditions in a smaller, separate reactor, and the polymerization reaction is allowed to proceed until the catalyst comprises a relatively small amount (e.g., about 5% to about 30% of the total weight) of the resulting composition. This pre-polymerized catalyst is then introduced to the large-scale reactor in which the polymerization is to be performed.

The high-density polyethylene polymers suitable for use in the invention can be produced using any suitable catalyst or combination of catalysts. Suitable catalysts include transition metal catalysts, such as supported reduced molybdenum oxide, cobalt molybdate on alumina, chromium oxide, and transition metal halides. Chromium oxide catalysts typically are produced by impregnating a chromium compound onto a porous, high surface area oxide carrier, such as silica, and then calcining it in dry air at 500-900 °C. This converts the chromium into a hexavalent surface chromate ester or dichromate ester. The chromium oxide catalysts can be used in conjunction with metal alkyl cocatalysts, such as alkyl boron, alkyl aluminum, alkyl zinc, and alkyl lithium. Supports for the chromium oxide include silica, silica-titania, silica-alumina, alumina, and aluminophosphates. Further examples of chromium oxide catalysts include those catalysts produced by depositing a lower valent organochromium compound, such as bis(arene) Cr⁰, allyl Cr²⁺ and Cr³⁺, beta stabilized alkyls of Cr²⁺ and Cr⁴⁺, and bis(cyclopentadienyl) Cr²⁺, onto a chromium oxide catalyst, such as those described above. Suitable transition metal catalysts also include supported chromium catalysts such as those based on chromocene or a silylchromate (e.g., bi(trisphenylsilyl)chromate). These chromium catalysts can be supported on any suitable high surface area support such as those described above for the chromium oxide catalysts, with silica typically being used. The supported chromium catalysts can also be used in conjunction with cocatalysts, such as the metal alkyl cocatalysts listed above for the chromium oxide catalysts. Suitable transition metal halide catalysts include titanium (III) halides (e.g., titanium (III) chloride), titanium (IV) halides (e.g., titanium (IV) chloride), vanadium halides, zirconium halides, and combinations thereof. These transition metal halides are often supported on a high surface area solid, such as magnesium chloride. The transition metal halide catalysts are typically used in conjunction with an aluminum alkyl cocatalyst, such as trimethylaluminum (i.e., Al(CH₃)₃) or triethylaluminum (i.e., Al(C₂H₅)₃). These transition metal halides may also be used in staged reactor processes. Suitable catalysts also include metallocene catalysts, such as cyclopentadienyl titanium halides (e.g., cyclopentadienyl titanium chlorides), cyclopentadienyl zirconium halides (e.g., cyclopentadienyl zirconium chlorides), cyclopentadienyl hafnium halides (e.g., cyclopentadienyl hafnium chlorides), and combinations thereof. Metallocene catalysts based on transition metals complexed with indenyl or fluorenyl ligands are also known and can be used to produce high-density polyethylene polymers suitable for use in the invention. The catalysts typically contain multiple ligands, and the ligands can be substituted with various groups (e.g., n-butyl group) or linked with bridging groups, such as -CH₂CH₂- or >SiPh₂. The metallocene catalysts typically are used in conjunction with a cocatalyst, such as methyl aluminoxane (i.e., (Al(CH₃)ₓO_{y})ₙ. Other cocatalysts include those described in U.S. Patent No. 5,919,983 (Rosen et al.), U.S. Patent No. 6,107,230 (McDaniel et al.), U.S. Patent No. 6,632,894 (McDaniel et al.), and U.S. Patent No. 6,300,271 (McDaniel et al). Other "single site" catalysts suitable for use in producing high-density polyethylene include diimine complexes, such as those described in U.S. Patent No. 5,891,963 (Brookhart et al.).

The high-density polyethylene polymers suitable for use in the invention can have any suitable molecular weight (e.g., weight average molecular weight). For example, the weight average molecular weight of the high-density polyethylene can be from 20,000 g/mol to about 1,000,000 g/mol or more. As will be understood by those of ordinary skill in the art, the suitable weight average molecular weight of the high-density polyethylene will depend, at least in part, on the particular application or end use for which the polymer is destined. For example, a high-density polyethylene polymer intended for blow molding applications can have a weight average molecular weight of about 100,000 g/mol to about 1,000,000 g/mol. A high-density polyethylene polymer intended for pipe applications or film applications can have a weight average molecular weight of about 100,000 g/mol to about 500,000 g/mol. A high-density polyethylene polymer intended for injection molding applications can have a weight average molecular weight of about 20,000 g/mol to about 80,000 g/mol. A high-density polyethylene polymer intended for wire insulation applications, cable insulation applications, tape applications, or filament applications can have a weight average molecular weight of about 80,000 g/mol to about 400,000 g/mol. A high-density polyethylene polymer intended for rotomolding applications can have a weight average molecular weight of about 50,000 g/mol to about 150,000 g/mol.

The high-density polyethylene polymers suitable for use in the invention can also have any suitable polydispersity, which is defined as the value obtained by dividing the weight average molecular weight of the polymer by the number average molecular weight of the polymer. For example, the high-density polyethylene polymer can have a polydispersity of greater than 2 to about 100. As understood by those skilled in the art, the polydispersity of the polymer is heavily influenced by the catalyst system used to produce the polymer, with the metallocene and other "single site" catalysts generally producing polymers with relatively low polydispersity and narrow molecular weight distributions and the other transition metal catalysts (e.g., chromium catalysts) producing polymers with higher polydispersity and broader molecular weight distributions. The high-density polyethylene polymers suitable for use in the invention can also have a multimodal (e.g., bimodal) molecular weight distribution. For example, the polymer can have a first fraction having a relatively low molecular weight and a second fraction having a relatively high molecular weight. The difference between the weight average molecular weight of the fractions in the polymer can be any suitable amount. In fact, it is not necessary for the difference between the weight average molecular weights to be large enough that two distinct molecular weight fractions can be resolved using gel permeation chromatography (GPC). However, in certain multimodal polymers, the difference between the weight average molecular weights of the fractions can be great enough that two or more distinct peaks can be resolved from the GPC curve for the polymer. In this context, the term "distinct" does not necessarily mean that the portions of the GPC curve corresponding to each fraction do not overlap, but is merely meant to indicate that a distinct peak (i.e., a local maximum) for each fraction can be resolved from the GPC curve for the polymer. The multimodal polymers suitable for use in the invention can be produced using any suitable process. As noted above, the multimodal polymers can be produced using staged reactor processes. One suitable example would be a staged solution process incorporating a series of stirred tanks. Alternatively, the multimodal polymers can be produced in a single reactor using a combination of catalysts each of which is designed to produce a polymer having a different weight average molecular weight.

The molecular weight distribution of the polymer can also be characterized by measuring and comparing the melt flow index (or melt flow rate) of the polymer under different conditions to yield a flow rate ratio (FRR). This method is described, for example, in Procedure D of ASTM Standard D1238 entitled "Standard Test Method for Melt Flow Rates of Thermoplastics by Extrusion Plastometer." Preferably, the FRR is calculated using the melt flow index measured using the 21.6 kg load specified in the standard (MFI_{21.6}) and the melt flow index measured using the 2.16 kg load specified in the standard (MFI_{2.16}), with both melt flow indices being measured at 190 °C temperature specified in the standard. The high-density polyethylene polymer used in the polymer composition can have any suitable FRR. Preferably, the high-density polyethylene polymer has a FRR (MFI_{21.6}/MFI_{2.16}) of about 65 or less. More preferably, the high-density polyethylene polymer has a FRR (MFI_{21.6}/MFI_{2.16}) of about 40 or less or about 20 or less.

The high-density polyethylene polymers suitable for use in the invention can have any suitable melt flow index. For example, the high-density polyethylene polymer can have a melt flow index of about 0.01 dg/min to about 50 dg/min (e.g., about 0.01 dg/min to about 40 dg/min). As with the weight average molecular weight, those of ordinary skill in the art understand that the suitable melt flow index for the high-density polyethylene polymer will depend, at least in part, on the particular application or end use for which the polymer is destined. Thus, for example, a high-density polyethylene polymer intended for blow molding applications can have a melt flow index of about 0.01 dg/min to about 1 dg/min. A high-density polyethylene polymer intended for blown film applications can have a melt flow index of about 0.5 dg/min to about 50 dg/min (e.g., about 1 dg/min to about 10 dg/min, about 1 dg/min to about 5 dg/min, or about 0.5 dg/min to about 3 dg/min). A high-density polyethylene polymer intended for cast film applications can have a melt flow index of about 2 dg/min to about 10 dg/min. A high-density polyethylene polymer intended for pipe applications can have a melt flow index of about 2 dg/min to about 40 dg/min (measured with the 21.6 kg load at 190 °C). A high-density polyethylene polymer intended for injection molding applications can have a melt flow index of about 2 dg/min to about 80 dg/min. A high-density polyethylene polymer intended for rotomolding applications can have a melt flow index of about 0.5 dg/min to about 10 dg/min. A high-density polyethylene polymer intended for tape applications can have a melt flow index of about 0.2 dg/min to about 4 dg/min. A high-density polyethylene polymer intended for filament applications can have a melt flow index of about 1 dg/min to about 20 dg/min. The melt flow index of the polymer is measured using ASTM Standard D1238-04c.

The high-density polyethylene polymers suitable for use in the invention generally do not contain high amounts of long-chain branching. The term "long-chain branching" is used to refer to branches that are attached to the polymer chain and are of sufficient length to affect the rheology of the polymer (e.g., branches of about 130 carbons or more in length). If desired for the application in which the polymer is to be used, the high-density polyethylene polymer can contain small amounts of long-chain branching. However, the high-density polyethylene polymers suitable for use in the invention typically contain very little long-chain branching (e.g., less than about 1 long-chain branch per 10,000 carbons, less than about 0.5 long-chain branches per 10,000 carbons, less than about 0.1 long-chain branches per 10,000 carbons, or less than about 0.01 long-chain branches per 10,000 carbons).

The degree of long chain branching in the polymer can also be characterized using rheological methods (see, e.g., R. N. Shroff and H. Mavridis, "Long-Chain-Branching Index for Essentially Linear Polyethylenes," Macromolecules, Vol. 32 (25), pp. 8454-8464 (1999)). In particular, the long chain branch index (LCBI) is a rheological index used to characterize relatively low levels of long-chain branching and is defined as follows: $LCBI = \frac{{η}_{0}^{0.179}}{4.8 ⋅ \left[η\right]} - 1$ where η₀ is the limiting, zero-shear viscosity (expressed in Poise) at 190 °C, and [η] is the intrinsic viscosity (expressed in dL/g) in trichlorobenzene at 135 °C. The LCBI is based on observations that low levels of long-chain branching, in an otherwise linear polymer, result in a large increase in melt viscosity, η₀, with no change in intrinsic viscosity, [η]. A higher LCBI means a greater number of long-chain branches per polymer chain. Preferably, the high-density polyethylene polymer used in the polymer composition has an LCBI of about 0.5 or less, about 0.3 or less, or about 0.2 or less.

In one preferred embodiment, the polymer composition comprises a blend of two or more high-density polyethylene polymer compositions. In one preferred embodiment comprising two high-density polyethylene polymer compositions, the first high-density polyethylene polymer composition has a density of about 950 kg/m³ to about 975 kg/m³ (preferably 950 kg/min³ to 960 kg/min³), and the second high-density polyethylene polymer composition has a density of about 950 kg/m³ to about 970 kg/m³ (preferably 955 kg/m³ to 965 kg/m³). The melt flow index of the first high-density polyethylene polymer composition (as determined in accordance with ASTM D 1238 at 190 °C using a 2.16 kg load) preferably is greater than 5 dg/min (more preferably from about 15 dg/min to about 30 dg/min). Furthermore, the melt flow index of the first high-density polyethylene polymer composition preferably is at least ten times greater than the melt flow index of the second high-density polyethylene polymer composition. The melt flow index of the second high-density polyethylene polymer composition (as determined in accordance with ASTM D 1238 at 190 °C using a 2.16 kg load) preferably is about 0.1 dg/min to about 2 dg/min (more preferably about 0.8 dg/min to about 2 dg/min). The first high-density polyethylene polymer composition can have any suitable polydispersity, but the polydispersity (as determined by gel permeation chromatography in accordance with ASTM D 6474-99) preferably is from about 2 to about 20, more preferably about 2 to about 4. While not wishing to be bound by theory, it is believed that a low polydispersity (e.g., from 2 to 4) for the first high-density polyethylene polymer composition may improve the nucleation rate and overall barrier performance of blown films prepared from the polymer composition. The polydispersity of the second high-density polyethylene polymer composition is not believed to be critical to achieving desirable results, but a polydispersity of from about 2 to about 4 is preferred for the second high-density polyethylene polymer. The first high-density polyethylene polymer composition described above can consist of a single high-density polyethylene polymer that provides the desired characteristics, or the first high-density polyethylene polymer composition can comprise a blend of two or more high-density polyethylene polymers that possesses the desired characteristics. Likewise, the second high-density polyethylene polymer composition can consist of a single high-density polyethylene polymer or a blend of two or more high-density polyethylene polymers that possesses the desired characteristics.

In the embodiment described in the preceding paragraph, the first and second high-density polyethylene polymer compositions can be present in the polymer composition in any suitable relative amounts. Preferably, the first high-density polyethylene polymer composition is present in an amount of from about 5 wt.% to about 60 wt.% of the total high-density polyethylene polymer present in the composition (with the second high-density polyethylene polymer composition forming the balance). In other preferred embodiments, the first high-density polyethylene polymer composition is present in an amount of from about 10 wt.% to about 40 wt.% or about 20 wt.% to about 40 wt.%. In one particularly preferred embodiment, the polymer composition comprises (i) about 10 wt.% to about 30 wt.% of a first high-density polyethylene polymer composition having a melt flow index of about 15 to about 30 dg/min and a density of about 950 kg/m³ to about 960 kg/m³ and (ii) about 70 wt.% to about 90 wt.% of a second high-density polyethylene polymer composition having a melt flow index of about 0.8 to about 2 dg/min and a density of about 955 kg/m³ to about 965 kg/m³. The blends of high-density polyethylene polymers described above can be made by any suitable process, such as (i) physical blending of particulate resins; (ii) co-feeding of different high-density polyethylene resins to a common extruder; (iii) melt mixing (in any conventional polymer mixing apparatus); (iv) solution blending; or (v) a polymerization process which employs two or more reactors. A highly preferred blend of high-density polyethylene polymer compositions is prepared by a solution polymerization process using two reactors that operate under different polymerization conditions. This provides a uniform, *in situ* blend of the first and second high-density polyethylene polymer compositions. An example of this process is described in published U.S. Patent Application Publication No. 2006/0047078 A1 (Swabey et al.), The overall blend of the high-density polyethylene polymer compositions preferably has a polydispersity of from about 3 to about 20.

The medium-density polyethylene polymers suitable for use in the invention generally have a density of about 926 kg/m³ to about 940 kg/m³. The term "medium-density polyethylene" is used to refer to polymers of ethylene that have a density between that of high-density polyethylene and linear low-density polyethylene and contain relatively short branches, at least as compared to the long branches present in low-density polyethylene polymers produced by the free radical polymerization of ethylene at high pressures.

The medium-density polyethylene polymers suitable for use in the invention generally are copolymers of ethylene and at least one α-olefin, such as 1-butene, 1-hexene, 1-octene, 1-decene, and 4-methyl-1-pentene. The α-olefin comonomer can be present in any suitable amount, but typically is present in an amount of less than about 8% by weight (e.g., less than about 5 mol%). As will be understood by those of ordinary skill in the art, the amount of comonomer suitable for the copolymer is largely driven by the end use for the copolymer and the required or desired polymer properties dictated by that end use.

The medium-density polyethylene polymers suitable for use in the invention can be produced by any suitable process. Like the high-density polyethylene polymers, the medium-density polyethylene polymers typically are produced in "low pressure" catalytic processes such as any of the processes described above in connection with the high-density polyethylene polymers suitable for use in the invention. Examples of suitable processes include, but are not limited to, gas-phase polymerization processes, solution polymerization processes, slurry polymerization processes, and staged reactor processes. Suitable staged reactor processes can incorporate any suitable combination of the gas-phase, solution, and slurry polymerization processes described above. As with high-density polyethylene polymers, staged reactor processes are often used to produce multimodal polymers.

The medium-density polyethylene polymers suitable for use in the invention can be produced using any suitable catalyst or combination of catalysts. For example, the polymers can be produced using Ziegler catalysts, such as transition metal (e.g., titanium) halides or esters used in combination with organoaluminum compounds (e.g., triethylaluminum). These Ziegler catalysts can be supported on, for example, magnesium chloride, silica, alumina, or magnesium oxide. The medium-density polyethylene polymers suitable for use in the invention can also be produced using so-called "dual Ziegler catalysts," which contain one catalyst species for dimerizing ethylene into 1-butene (e.g., a combination of a titanium ester and triethylaluminum) and another catalyst for copolymerization of ethylene and the generated 1-butene (e.g., titanium chloride supported on magnesium chloride). The medium-density polyethylene polymers suitable for use in the invention can also be produced using chromium oxide catalysts, such as those produced by depositing a chromium compound onto a silica-titania support, oxidizing the resulting catalyst in a mixture of oxygen and air, and then reducing the catalyst with carbon monoxide. These chromium oxide catalysts typically are used in conjunction with cocatalysts such as trialkylboron or trialkylaluminum compounds. The chromium oxide catalysts can also be used in conjunction with a Ziegler catalyst, such as a titanium halide- or titanium ester-based catalyst. The medium-density polyethylene polymers suitable for use in the invention can also be produced using supported chromium catalysts such as those described above in the discussion of catalysts suitable for making high-density polyethylene. The medium-density polyethylene polymers suitable for use in the invention can also be produced using metallocene catalysts. Several different types of metallocene catalysts can be used. For example, the metallocene catalyst can contain a bis(metallocene) complex of zirconium, titanium, or hafnium with two cyclopentadienyl rings and methylaluminoxane. As with the catalysts used in high-density polyethylene production, the ligands can be substituted with various groups (e.g., n-butyl group) or linked with bridging groups. Another class of metallocene catalysts that can be used are composed of bis(metallocene) complexes of zirconium or titanium and anions of perfluorinated boronaromatic compounds. A third class of metallocene catalysts that can be used are referred to as constrained-geometry catalysts and contain monocyclopentadienyl derivatives of titanium or zirconium in which one of the carbon atoms in the cyclopentadienyl ring is linked to the metal atom by a bridging group. These complexes are activated by reacting them with methylaluminoxane or by forming ionic complexes with non-coordinative anions, such as B(C₆F₅)₄⁻ or B(C₆F₅)₃CH₃⁻. A fourth class of metallocene catalysts that can be used are metallocene-based complexes of a transition metal, such as titanium, containing one cyclopentadienyl ligand in combination with another ligand, such as a phosphinimine or -O-SiR₃. This class of metallocene catalyst is also activated with methylaluminoxane or a boron compound. Other catalysts suitable for use in making the medium-density polyethylene suitable for use in the invention include, but are not limited to, the catalysts disclosed in U.S. Patent No. 6,649,558.

The medium-density polyethylene polymers suitable for use in the invention can have any suitable compositional uniformity, which is a term used to describe the uniformity of the branching in the copolymer molecules of the polymer. Many commercially-available medium-density polyethylene polymers have a relatively low compositional uniformity in which the high molecular weight fraction of the polymer contains relatively little of the α-olefin comonomer and has relatively little branching while the low molecular weight fraction of the polymer contains a relatively high amount of the α-olefin comonomer and has a relatively large amount of branching. Alternatively, another set of medium-density polyethylene polymers have a relatively low compositional uniformity in which the high molecular weight fraction of the polymer contains a relatively high amount of the α-olefin comonomer while the low molecular weight fraction of the polymer contains relatively little of the α-olefin comonomer. The compositional uniformity of the polymer can be measured using any suitable method, such as temperature rising elution fractionation.

The medium-density polyethylene polymers suitable for use in the invention can have any suitable molecular weight. For example, the polymer can have a weight average molecular weight of about 50,000 g/mol to about 200,000 g/mol. As will be understood by those of ordinary skill in the art, the suitable weight average molecular weight of the medium-density polyethylene will depend, at least in part, on the particular application or end use for which the polymer is destined.

The medium-density polyethylene polymers suitable for use in the invention can also have any suitable polydispersity. Many commercially available medium-density polyethylene polymers have a polydispersity of about 2 to about 30. The medium-density polyethylene polymers suitable for use in the invention can also have a multimodal (e.g., bimodal) molecular weight distribution. For example, the polymer can have a first fraction having a relatively low molecular weight and a second fraction having a relatively high molecular weight. As with the high-density polyethylene polymers suitable for use in the invention, the difference between the weight average molecular weight of the fractions in the multimodal medium-density polyethylene polymer can be any suitable amount. In fact, it is not necessary for the difference between the weight average molecular weights to be large enough that two distinct molecular weight fractions can be resolved using gel permeation chromatography (GPC). However, in certain multimodal polymers, the difference between the weight average molecular weights of the fractions can be great enough that two or more distinct peaks can be resolved from the GPC curve for the polymer. In this context, the term "distinct" does not necessarily mean that the portions of the GPC curve corresponding to each fraction do not overlap, but is merely meant to indicate that a distinct peak for each fraction can be resolved from the GPC curve for the polymer. The multimodal polymers suitable for use in the invention can be produced using any suitable process. As noted above, the multimodal polymers can be produced using staged reactor processes. One suitable example would be a staged solution process incorporating a series of stirred tanks. Alternatively, the multimodal polymers can be produced in a single reactor using a combination of catalysts each of which is designed to produce a polymer having a different weight average molecular weight

The medium-density polyethylene polymers suitable for use in the invention can have any suitable melt flow index. For example, the medium-density polyethylene polymer can have a melt flow index of about 0.01 dg/min to about 200 dg/min. As with the weight average molecular weight, those of ordinary skill in the art understand that the suitable melt flow index for the medium-density polyethylene polymer will depend, at least in part, on the particular application or end use for which the polymer is destined. Thus, for example, a medium-density polyethylene polymer intended for blow molding applications or pipe applications can have a melt flow index of about 0.01 dg/min to about 1 dg/min. A medium-density polyethylene polymer intended for blown film applications can have a melt flow index of about 0.5 dg/min to about 3 dg/min. A medium-density polyethylene polymer intended for cast film applications can have a melt flow index of about 2 dg/min to about 10 dg/min. A medium-density polyethylene polymer intended for injection molding applications can have a melt flow index of about 6 dg/min to about 200 dg/min. A medium-density polyethylene polymer intended for rotomolding applications can have a melt flow index of about 4 dg/min to about 7 dg/min. A medium-density polyethylene polymer intended for wire and cable insulation applications can have a melt flow index of about 0.5 dg/min to about 3 dg/min. The melt flow index of the polymer is measured using ASTM Standard D1238-04c.

The medium-density polyethylene polymers suitable for use in the invention generally do not contain a significant amount of long-chain branching. For example, the medium-density polyethylene polymers suitable for use in the invention generally contain less than about 0.1 long-chain branches per 10,000 carbon atoms (e.g., less than about 0.002 long-chain branches per 100 ethylene units) or less than about 0.01 long-chain branches per 10,000 carbon atoms.

The linear low-density polyethylene polymers suitable for use in the invention generally have a density of 925 kg/m³ or less (e.g., about 910 kg/m³ to about 925 kg/m³). The term "linear low-density polyethylene" is used to refer to lower density polymers of ethylene having relatively short branches, at least as compared to the long branches present in low-density polyethylene polymers produced by the free radical polymerization of ethylene at high pressures.

The linear low-density polyethylene polymers suitable for use in the invention generally are copolymers of ethylene and at least one α-olefin, such as 1-butene, 1-hexene, 1-octene, 1-decene, and 4-methyl-1-pentene. The α-olefin comonomer can be present in any suitable amount, but typically is present in an amount of less than about 6 mol.% (e.g., about 2 mol% to about 5 mol%). As will be understood by those of ordinary skill in the art, the amount of comonomer suitable for the copolymer is largely driven by the end use for the copolymer and the required or desired polymer properties dictated by that end use.

The linear low-density polyethylene polymers suitable for use in the invention can be produced by any suitable process. Like the high-density polyethylene polymers, the linear low-density polyethylene polymers typically are produced in "low pressure" catalytic processes such as any of the processes described above in connection with the high-density polyethylene polymers suitable for use in the invention. Suitable processes include, but are not limited to, gas-phase polymerization processes, solution polymerization processes, slurry polymerization processes, and staged reactor processes. Suitable staged reactor processes can incorporate any suitable combination of the gas-phase, solution, and slurry polymerization processes described above. As with high-density polyethylene polymers, staged reactor processes are often used to produce multimodal polymers.

The linear low-density polyethylene polymers suitable for use in the invention can be produced using any suitable catalyst or combination of catalysts. For example, the polymers can be produced using Ziegler catalysts, such as transition metal (e.g., titanium) halides or esters used in combination with organoaluminum compounds (e.g., triethylaluminum). These Ziegler catalysts can be supported on, for example, magnesium chloride, silica, alumina, or magnesium oxide. The linear low-density polyethylene polymers suitable for use in the invention can also be produced using so-called "dual Ziegler catalysts," which contain one catalyst species for dimerizing ethylene into 1-butene (e.g., a combination of a titanium ester and triethylaluminum) and another catalyst for copolymerization of ethylene and the generated 1-butene (e.g., titanium chloride supported on magnesium chloride). The linear low-density polyethylene polymers suitable for use in the invention can also be produced using chromium oxide catalysts, such as those produced by depositing a chromium compound onto a silica-titania support, oxidizing the resulting catalyst in a mixture of oxygen and air, and then reducing the catalyst with carbon monoxide. These chromium oxide catalysts typically are used in conjunction with cocatalysts such as trialkylboron or trialkylaluminum compounds. The chromium oxide catalysts can also be used in conjunction with a Ziegler catalyst, such as a titanium halide- or titanium ester-based catalyst. The linear low-density polyethylene polymers suitable for use in the invention can also be produced using supported chromium catalysts such as those described above in the discussion of catalysts suitable for making high-density polyethylene. The linear low-density polyethylene suitable for use in the invention can also be produced using metallocene catalysts. Several different types of metallocene catalysts can be used. For example, the metallocene catalyst can contain a bis(metallocene) complex of zirconium, titanium, or hafnium with two cyclopentadienyl rings and methylaluminoxane. As with the catalysts used in high-density polyethylene production, the ligands can be substituted with various groups (e.g., n-butyl group) or linked with bridging groups. Another class of metallocene catalysts that can be used are composed of bis(metallocene) complexes of zirconium or titanium and anions of perfluorinated boronaromatic compounds. A third class of metallocene catalysts that can be used are referred to as constrained-geometry catalysts and contain monocyclopentadienyl derivatives of titanium or zirconium in which one of the carbon atoms in the cyclopentadienyl ring is linked to the metal atom by a bridging group. These complexes are activated by reacting them with methylaluminoxane or by forming ionic complexes with non-coordinative anions, such as B(C₆F₅)₄⁻ or B(C₆F₅)₃CH₃⁻. A fourth class of metallocene catalysts that can be used are metallocene-based complexes of a transition metal, such as titanium, containing one cyclopentadienyl ligand in combination with another ligand, such as a phosphinimine or -O-SiR₃. This class of metallocene catalyst is also activated with methylaluminoxane or a boron compound. Other catalysts suitable for use in making the linear low-density polyethylene suitable for use in the invention include, but are not limited to, the catalysts disclosed in U.S. Patent No. 6,649,558.

The linear low-density polyethylene polymers suitable for use in the invention can have any suitable compositional uniformity, which is a term used to describe the uniformity of the branching in the copolymer molecules of the polymer. Many commercially-available linear low-density polyethylene polymers have a relatively low compositional uniformity in which the high molecular weight fraction of the polymer contains relatively little of the α-olefin comonomer and has relatively little branching while the low molecular weight fraction of the polymer contains a relatively high amount of the α-olefin comonomer and has a relatively large amount of branching. Alternatively, another set of linear low-density polyethylene polymers have a relatively low compositional uniformity in which the high molecular weight fraction of the polymer contains a relatively high amount of the α-olefin comonomer while the low molecular weight fraction of the polymer contains relatively little of the α-olefin comonomer. The compositional uniformity of the polymer can be measured using any suitable method, such as temperature rising elution fractionation.

The linear low-density polyethylene polymers suitable for use in the invention can have any suitable molecular weight. For example, the polymer can have a weight average molecular weight of about 20,000 g/mol to about 250,000 g/mol. As will be understood by those of ordinary skill in the art, the suitable weight average molecular weight of the linear low-density polyethylene will depend, at least in part, on the particular application or end use for which the polymer is destined.

The linear low-density polyethylene polymers suitable for use in the invention can also have any suitable polydispersity. Many commercially available linear low-density polyethylene polymers have a relatively narrow molecular weight distribution and thus a relatively low polydispersity, such as about 2 to about 5 (e.g., about 2.5 to about 4.5 or about 3.5 to about 4.5). The linear low-density polyethylene polymers suitable for use in the invention can also have a multimodal (e.g., bimodal) molecular weight distribution. For example, the polymer can have a first fraction having a relatively low molecular weight and a second fraction having a relatively high molecular weight. As with the high-density polyethylene polymers suitable for use in the invention, the difference between the weight average molecular weight of the fractions in the multimodal linear low-density polyethylene polymer can be any suitable amount. In fact, it is not necessary for the difference between the weight average molecular weights to be large enough that two distinct molecular weight fractions can be resolved using gel permeation chromatography (GPC). However, in certain multimodal polymers, the difference between the weight average molecular weights of the fractions can be great enough that two or more distinct peaks can be resolved from the GPC curve for the polymer. In this context, the term "distinct" does not necessarily mean that the portions of the GPC curve corresponding to each fraction do not overlap, but is merely meant to indicate that a distinct peak for each fraction can be resolved from the GPC curve for the polymer. The multimodal polymers suitable for use in the invention can be produced using any suitable process. As noted above, the multimodal polymers can be produced using staged reactor processes. One suitable example would be a staged solution process incorporating a series of stirred tanks. Alternatively, the multimodal polymers can be produced in a single reactor using a combination of catalysts each of which is designed to produce a polymer having a different weight average molecular weight.

The linear low-density polyethylene polymers suitable for use in the invention can have any suitable melt flow index. For example, the linear low-density polyethylene polymer can have a melt flow index of about 0.01 dg/min to about 200 dg/min. As with the weight average molecular weight, those of ordinary skill in the art understand that the suitable melt flow index for the linear low-density polyethylene polymer will depend, at least in part, on the particular application or end use for which the polymer is destined. Thus, for example, a linear low-density polyethylene polymer intended for blow molding applications or pipe applications can have a melt flow index of about 0.01 dg/min to about 1 dg/min. A linear low-density polyethylene polymer intended for blown film applications can have a melt flow index of about 0.5 dg/min to about 3 dg/min. A linear low-density polyethylene polymer intended for cast film applications can have a melt flow index of about 2 dg/min to about 10 dg/min. A linear low-density polyethylene polymer intended for injection molding applications can have a melt flow index of about 6 dg/min to about 200 dg/min. A linear low-density polyethylene polymer intended for rotomolding applications can have a melt flow index of about 4 dg/min to about 7 dg/min. A linear low-density polyethylene polymer intended for wire and cable insulation applications can have a melt flow index of about 0.5 dg/min to about 3 dg/min. The melt flow index of the polymer is measured using ASTM Standard D1238-04c.

The linear low-density polyethylene polymers suitable for use in the invention generally do not contain a significant amount of long-chain branching. For example, the linear low-density polyethylene polymers suitable for use in the invention generally contain less than about 0.1 long-chain branches per 10,000 carbon atoms (e.g., less than about 0.002 long-chain branches per 100 ethylene units) or less than about 0.01 long-chain branches per 10,000 carbon atoms.

The low-density polyethylene polymers suitable for use in the invention generally have a density of less than 935 kg/m³ and, in contrast to high-density polyethylene, medium-density polyethylene and linear low-density polyethylene, have a relatively large amount of long-chain branching in the polymer.

The low-density polyethylene polymers suitable for use in the invention can be either ethylene homopolymers or copolymers of ethylene and a polar comonomer. Suitable polar comonomers include, but are not limited to, vinyl acetate, methyl acrylate, ethyl acrylate, and acrylic acid. These comonomers can be present in any suitable amount, with comonomer contents as high as 20% by weight being used for certain applications. As will be understood by those skilled in the art, the amount of comonomer suitable for the polymer is largely driven by the end use for the polymer and the required or desired polymer properties dictated by that end use.

The low-density polyethylene polymers suitable for use in the invention can be produced using any suitable process, but typically the polymers are produced by the free-radical initiated polymerization of ethylene at high pressure (e.g., about 81 to about 276 MPa) and high temperature (e.g., about 130 to about 330 °C). Any suitable free radical initiator can be used in such processes, with peroxides and oxygen being the most common. The free-radical polymerization mechanism gives rise to short-chain branching in the polymer and also to the relatively high degree of long-chain branching that distinguishes low-density polyethylene from other ethylene polymers (e.g., high-density polyethylene and linear low-density polyethylene). The polymerization reaction typically is performed in an autoclave reactor (e.g., a stirred autoclave reactor), a tubular reactor, or a combination of such reactors positioned in series.

The low-density polyethylene polymers suitable for use in the invention can have any suitable molecular weight. For example, the polymer can have a weight average molecular weight of about 30,000 g/mol to about 500,000 g/mol. As will be understood by those of ordinary skill in the art, the suitable weight average molecular weight of the low-density polyethylene will depend, at least in part, on the particular application or end use for which the polymer is destined. For example, a low-density polyethylene polymer intended for blow molding applications can have a weight average molecular weight of about 80,000 g/mol to about 200,000 g/mol. A low-density polyethylene polymer intended for pipe applications can have a weight average molecular weight of about 80,000 g/mol to about 200,000 g/mol. A low-density polyethylene polymer intended for injection molding applications can have a weight average molecular weight of about 30,000 g/mol to about 80,000 g/mol. A low-density polyethylene polymer intended for film applications can have a weight average molecular weight of about 60,000 g/mol to about 500,000 g/mol.

The low-density polyethylene polymers suitable for use in the invention can have any suitable melt flow index. For example, the low-density polyethylene polymer can have a melt flow index of about 0.2 to about 100 dg/min. As noted above, the melt flow index of the polymer is measured using ASTM Standard D1238-04c.

As noted above, one of the major distinctions between low-density polyethylene and other ethylene polymers is a relatively high degree of long-chain branching within the polymer. The low-density polyethylene polymers suitable for use in the invention can exhibit any suitable amount of long-chain branching, such as about 0.01 or more long-chain branches per 10,000 carbon atoms, about 0.1 or more long-chain branches per 10,000 carbon atoms, about 0.5 or more long-chain branches per 10,000 carbon atoms, about 1 or more long-chain branches per 10,000 carbon atoms, or about 4 or more long-chain branches per 10,000 carbon atoms. While there is not a strict limit on the maximum extent of long-chain branching that can be present in the low-density polyethylene polymers suitable for use in the invention, the long-chain branching in many low-density polyethylene polymers is less than about 100 long-chain branches per 10,000 carbon atoms.

The polyethylene polymer composition utilized in the composition can comprise any suitable polyethylene polymer or mixture of polyethylene polymers. However, it is believed that polyethylene polymer compositions exhibiting greater degrees of melt relaxation will be more effectively nucleated by the salt of cyclopentylphosphonic acid. During certain melt processing of a polymer (e.g., blown film manufacturing), the polymer melt is subjected to extensional thinning or strain as it is extruded through a die. The polymer melt may be subjected to further extensional thinning or strain as the extruded polymer melt is further processed, such as being drawn and/or blown. The strain applied to the polymer melt results in a flow direction orientation of extended polymer chains in the polymer melt. As the processed polymer melt cools, these directionally oriented, extended polymer chains can return to a less ordered state before crystallization of the polymer melt. This process is referred to herein as "melt relaxation." Alternatively, the directionally oriented, extended polymer chains can remain oriented in the melt and crystallize to form fibrils. These fibrils provide sites which can initiate self-nucleation of the polymer. If enough of such fibrils form in the polymer as it solidifies from the melt, the resulting strain-induced self-nucleation can become the dominant mode of nucleation in the polymer. While self-nucleation of the polymer may sound beneficial, the polymer structure produced by such self-nucleation is generally less favorable for certain desired physical properties. For example, self-nucleated polyethylene generally exhibits higher water vapor and oxygen transmission rates than polyethylene that has been heterogeneously nucleated with, for example, a salt of cyclopentylphosphonic acid. Thus, in order to maximize the degree of nucleation induced by the salt of cyclopentylphosphonic acid, the polymer composition preferably contains a polyethylene polymer composition that exhibits sufficient melt relaxation to ensure that strain-induced, self-nucleation will not dominate.

The degree of melt relaxation exhibited by a polymer cannot easily be directly quantified. Further, it is believed that melt relaxation can be influenced by a number of factors, such as molecular weight, breadth of the molecular weight distribution, the relative amount of the high molecular weight fraction in the molecular weight distribution, and branching or non-linear chains in the polymer. The number of factors involved and the complex relationship between those factors make it difficult to identify ranges of values for each that will be sufficient to define a polyethylene polymer that exhibits sufficient melt relaxation. In other words, one might try to define a molecular weight distribution for polymers that exhibit sufficient melt relaxation, but the appropriate range may change with the "shape" of the distribution (i.e., the relative amount of the high molecular weight fraction). Thus, while these factors can be considered when attempting to identify a polyethylene polymer that exhibits sufficient melt relaxation, a more direct and accurate gauge of melt relaxation may be desired.

The shear storage modulus (*G'*) of a viscoelastic material (e.g., a polymer melt) is related to stored energy (stress), such as that stored in the directionally oriented, extended polymer chains described above. The shear loss modulus (*G"*) of a viscoelastic material is related to energy loss or dissipation, such as that released by relaxation of the directionally oriented, extended polymer chains in the polymer melt. The ratio of the shear loss modulus and the shear storage modulus (*G*"/*G*'), which is defined as tan δ, is proportional to the loss versus storage of energy at a given strain rate. In a material with tan δ less than 1, the storage of energy predominates at the measured strain rate. In a material with tan δ greater than 1, the loss (dissipation) of energy predominates at the measured strain rate. Further, a comparison of tan δ (e.g., a ratio of tan δ) measured at different strain rates can be used to quantify the degree to which the predominance of energy loss and energy storage change in the material with changes in the strain rate.

The shear storage modulus and shear loss modulus can be measured by various techniques and at various strains rates. However, if the moduli are to be used in accurately gauging melt relaxation in the polymer, both moduli should be measured at or near strain rates to which the polymer melt will be subjected during melt processing. To that end, the inventors believe that measurement of the shear storage modulus and shear loss modulus by parallel plate rheometer at angular frequencies of approximately 0.1 rad/s and approximately 10 rad/s provide a fair approximation of the strain rates to which the polyethylene polymer composition melt will be subjected during processing. As noted before, the ratio between tan δ at these two strain rates can be used to show changes in energy loss and energy storage as the strain rate changes. After extensive experimentation with various polymers and polymer compositions, it is believed that polyethylene polymers in which energy loss appreciably increases (i.e., tan δ appreciably increases) as the strain rate decreases (i.e., the angular frequency decreases) exhibit sufficient melt relaxation for heterogeneous nucleation with a salt of cyclopentylphosphonic acid. In particular, it is believed that the ratio between tan δ at approximately 0.1 rad/s and tan δ at approximately 10 rad/s is particularly useful at identifying polymers that exhibit desirable levels of melt relaxation. In particular, it is believed that the ratio between tan δ at approximately 0.1 rad/s and tan δ at approximately 10 rad/s, which is hereafter referred to as the "Melt Relaxation Ratio," should be 1.5 or greater. In other words, the polyethylene polymer composition preferably has a Melt Relaxation Ratio of 1.5 or greater, more preferably 1.55 or greater.

As noted above, the Melt Relaxation Ratio (MRR) is defined as the ratio between tan δ at approximately 0.1 rad/s and tan δ at approximately 10 rad/s: $MRR = \frac{tan {δ}_{0.1 rad / s}}{tan {δ}_{10 rad / s}}$ In the definition, the two angular frequencies have been defined as being approximately equal to a given value. Thus, tan δ at approximately 0.1 rad/s can be measured at any angular frequency between 0.095 and 0.105 rad/s, and tan δ at approximately 10 rad/s can be measured at any angular frequency between 9.5 rad/s and 10.5 rad/s. While the exact angular frequencies used in determining MRR can vary within the ranges noted above, the ratio of the two angular frequencies must be 1:100 (i.e., there must be a 100-fold difference between the two angular frequencies).

The Melt Relaxation Ratio can be measured by any suitable technique. Preferably, the shear loss modulus (*G"*), the shear storage modulus (*G'*), and tan δ are determined by parallel plate rheometry at a temperature of 190 °C using a rotational rheometer equipped with 25 mm parallel plates set at a 1.1 mm gap. The polymer sample used for measurement is provided in the form of a compression molded disc. During the measurement, the angular distance or strain preferably is kept low to remain in the non-hysteresis region, with a nominal strain of approximately one percent being preferred. Since these parameters are determined from the polymer melt, the presence of the nucleating agent will not have any appreciable effects on the shear loss modulus (*G"*), the shear storage modulus (*G'*), and tan δ measured from the polyethylene polymer. Therefore, these parameters (and the Melt Relaxation Ratio) can be measured from the polyethylene polymer composition before it is combined with the salt of cyclopentylphosphonic acid, or the parameters can be measured from the polymer composition comprising the polyethylene polymer composition and the salt of cyclopentylphosphonic acid.

As noted above, the polyethylene polymer composition can comprise any suitable polyethylene polymer or mixture of polyethylene polymers exhibiting the desired Melt Relaxation Ratio. Thus, the polyethylene polymer composition can comprise a single polyethylene polymer exhibiting the desired Melt Relaxation Ratio. Alternatively, the polyethylene polymer composition can comprise a mixture of two or more polyethylene polymers in which the mixture exhibits the desired Melt Relaxation Ratio. In such a mixture, each polyethylene polymer can exhibit a Melt Relaxation Ratio falling within the desired range, but this is not necessary. For example, a polyethylene polymer exhibiting a relatively low Melt Relaxation Ratio (e.g., less than 1.5) can be mixed with an appropriate amount of another polyethylene polymer having a higher Melt Relaxation Ratio (e.g., 1.55 or more) to yield a polyethylene polymer composition exhibiting the desired Melt Relaxation Ratio.

The degree of melt relaxation of the polyethylene polymer can alternatively be quantified by other means. For example, after extensive experimentation with various polymers and polymer compositions, it is believed that the ratio of tan δ values at which sufficient melt relaxation occurs can be affected by the molecular weight of the polymer, with polymers having a higher molecular weight requiring a higher ratio to achieve sufficient melt relaxation. Thus, the ratio between tan δ values can benefit from an additional factor to account for the effect of the polymer's molecular weight. The molecular weight of a polymer is generally inversely proportional to the melt flow index of the polymer. Further, the relationship between molecular weight and melt flow index is not linear-it is more generally logarithmic in nature. Accordingly, the ratio between tan δ values can be augmented to account for the molecular weight effect by multiplying the ratio by the sum of 1 and the natural logarithm of the melt flow index of the polymer. The resulting parameter, which is hereafter referred to as the "Melt Relaxation Index," should be 2 or greater. In other words, the polyethylene polymer composition preferably has a Melt Relaxation Index of 2 or greater, more preferably 2.1 or greater.

Thus, the Melt Relaxation Index (MRI) is defined as the product of (i) the sum of 1 and the natural logarithm of the melt flow index of the polymer and (ii) the ratio between tan δ at approximately 0.1 rad/s and tan δ at approximately 10 rad/s: $MRI = \left(1+log\left(MFI\right)\right) \times \frac{tan {δ}_{0.1 rad / s}}{tan {δ}_{10 rad / s}}$ In the definition, the two angular frequencies have been defined as being approximately equal to a given value. Thus, tan δ at approximately 0.1 rad/s can be measured at any angular frequency between 0.095 and 0.105 rad/s, and tan δ at approximately 10 rad/s can be measured at any angular frequency between 9.5 rad/s and 10.5 rad/s. While the exact angular frequencies used in determining MRR can vary within the ranges noted above, the ratio of the two angular frequencies must be 0.01 (i.e., there must be a 100-fold difference between the two angular frequencies). The melt flow index of the polymer, which can be reported in units of decigrams per minute (dg/min) or grams per 10 minutes (g/10 min), is measured in accordance with ASTM Standard D1238 at 190 °C using a 2.16 kg load.

The Melt Relaxation Index can be measured by any suitable technique. Preferably, the shear loss modulus (*G"*), the shear storage modulus (*G'*), and tan δ are determined by parallel plate rheometry as described above in connection with the Melt Relaxation Ratio. As with the measurement of the Melt Relaxation Ratio, the presence of the nucleating agent will not have any appreciable effects on the shear loss modulus (*G"*), the shear storage modulus (*G'*), tan δ, or melt flow index measured from the polyethylene polymer composition. Therefore, these parameters (and the Melt Relaxation Index) can be measured from the polyethylene polymer composition before it is combined with the salt of cyclopentylphosphonic acid, or the parameters can be measured from a polymer composition comprising the polyethylene polymer composition and the salt of cyclopentylphosphonic acid.

As noted above, the polyethylene polymer composition can comprise any suitable polyethylene polymer or mixture of polyethylene polymers exhibiting the desired Melt Relaxation Index. Thus, the polyethylene polymer composition can comprise a single polyethylene polymer exhibiting the desired Melt Relaxation Index. Alternatively, the polyethylene polymer composition can comprise a mixture of two or more polyethylene polymers in which the mixture exhibits the desired Melt Relaxation Index. In such a mixture, each polyethylene polymer can exhibit a Melt Relaxation Index falling within the desired range, but this is not necessary. For example, a polyethylene polymer exhibiting a relatively low Melt Relaxation Index (e.g., less than 2) can be mixed with an appropriate amount of another polyethylene polymer having a higher Melt Relaxation Index (e.g., 2.1 or more) to yield a polyethylene polymer composition exhibiting the desired Melt Relaxation Index.

As noted above, the polymer composition also comprises a salt of cyclopentylphosphonic acid. Cyclopentylphosphonic acid has the structure of Formula (I) below: 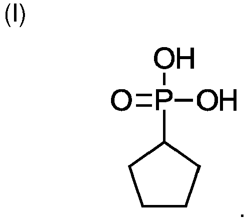 As can be seen from Formula (I), cyclopentylphosphonic acid is a diprotic acid (i.e., the compound contains two acidic hydrogen atoms). Thus, cyclopentylphosphonic acid can yield two cyclopentylphosphonate anions-a first anion having a charge of -1 (negative one) in which only one acidic hydrogen has been removed and a second anion having a charge of -2 (negative two) in which both acidic hydrogens have been removed. Preferably, the salt of cyclopentylphosphonic acid used in the polymer composition is a salt in which the cyclopentylphosphonic acid has been fully deprotonated (i.e., both acidic hydrogen atoms of the cyclopentylphosphonic acid have been removed).

The salt of cyclopentylphosphonic acid used in the polymer composition can contain any suitable cation(s) to balance the charge of the cyclopentylphosphonate anion. In a preferred embodiment, the salt of cyclopentylphosphonic acid comprises one or more cations selected from the group consisting of Group 1 element cations, Group 2 element cations, and Group 12 element cations. Suitable Group 1 element cations include, but are not limited to, sodium cations and lithium cations. Thus, in a preferred embodiment, the salt of cyclopentylphosphonic acid is selected from the group consisting of disodium cyclopentylphosphonate, dilithium cyclopentylphosphonate, and mixtures thereof. Suitable Group 2 element cations include, but are not limited to, calcium cations and magnesium cations. Thus, in another preferred embodiment, the salt of cyclopentylphosphonic acid is selected from the group consisting of calcium cyclopentylphosphonate, magnesium cyclopentylphosphonate, and mixtures thereof. Suitable Group 12 element cations include, but are not limited to, zinc cations. Thus, in yet another preferred embodiment, the salt of cyclopentylphosphonic acid is zinc cyclopentylphosphonate.

The salts of cyclopentylphosphonic acid suitable for use in the polymer composition are crystalline solids. Some of these crystalline solids can have water of crystallization or water of hydration incorporated into the crystalline structure. Thus, the salt of cyclopentylphosphonic acid used in the polymer composition can be a hydrate (i.e., a salt of cyclopentylphosphonic acid containing water of crystallization/water of hydration in its crystalline structure) or a dehydrate (i.e., a salt of cyclopentylphosphonic acid that does not contain water of crystallization/water of hydration in its crystalline structure). For example, when the salt of cyclopentylphosphonic acid comprises a calcium cation, the salt of cyclopentylphosphonic acid preferably is anhydrous calcium cyclopentylphosphonate (i.e., calcium cyclopentylphosphonate without any water of crystallization/water of hydration in its crystalline structure).

The salt of cyclopentylphosphonic acid can have any suitable specific surface area (e.g., BET specific surface area). In a preferred embodiment, the salt of cyclopentylphosphonic acid has a BET specific surface area of about 20 m²/g or more. In another preferred embodiment, the salt of cyclopentylphosphonic acid has a BET specific surface area of about 30 m²/g or more. The BET specific surface area of the salt of cyclopentylphosphonic acid can be measured by any suitable technique. Preferably, the BET specific surface area of the salt of cyclopentylphosphonic acid is measured in accordance with ISO Standard 9277:2010, which is entitled "Determination of the Specific Surface Area of Solids by Gas Adsorption - BET method," using nitrogen as the adsorbing gas. The salts of cyclopentylphosphonic acid disclosed herein generally have a layered structure that can be exfoliated using techniques known in the art. Such exfoliation of the layered structure increases the BET specific surface area of the salt of cyclopentylphosphonic acid, which aids in dispersion. Physical methods of increasing the BET surface area of the salt of cyclopentylphosphonic acid include air jet milling, pin milling, hammer milling, and grinding mills. Improved dispersion and surface area can also be achieved through more rigorous mixing and extrusion methods, such as high-intensity mixing and twin-screw extrusion. Thus, those salts of cyclopentylphosphonic acid that do not have the desired BET specific surface area can be exfoliated using these and other known techniques until the desired BET specific surface area is achieved.

The polymer composition can contain any suitable amount of the salt of cyclopentylphosphonic acid. In a preferred embodiment, the salt of cyclopentylphosphonic acid is present in the polymer composition in an amount of 50 parts-per-million (ppm) or more, based on the total weight of the polymer composition. In another preferred embodiment, the salt of cyclopentylphosphonic acid is present in the polymer composition in an amount of 75 ppm or more, 100 ppm or more, 150 ppm or more, 200 ppm or more, or 250 ppm or more, based on the total weight of the polymer composition. The salt of cyclopentylphosphonic acid preferably is present in the polymer composition in an amount of 10,000 ppm or less, based on the total weight of the polymer composition. In a preferred embodiment, the salt of cyclopentylphosphonic acid preferably is present in the polymer composition in an amount of 5,000 ppm or less, 4,000 ppm or less, 3,000 ppm or less, 2,000 ppm or less, 1,500 ppm or less, 1,250 ppm or less, or 1,000 ppm or less. based on the total weight of the polymer composition. Thus, in a series of preferred embodiments, the salt of cyclopentylphosphonic acid is present in the polymer composition in an amount of 50 ppm to 10,000 ppm (e.g., 50 ppm to 5,000 ppm, 50 ppm to 4,000 ppm, 50 ppm to 3,000 ppm, 50 ppm to 2,000 ppm, 50 ppm to 1,500 ppm, 50 ppm to 1,250 ppm, or 50 ppm to 1,000 ppm), 75 ppm to 10,000 ppm (e.g., 75 ppm to 5,000 ppm, 75 ppm to 4,000 ppm, 75 ppm to 3,000 ppm, 75 ppm to 2,000 ppm, 75 ppm to 1,500 ppm, 75 ppm to 1,250 ppm, or 75 ppm to 1,000 ppm), 100 ppm to 10,000 ppm (e.g., 100 ppm to 5,000 ppm, 100 ppm to 4,000 ppm, 100 ppm to 3,000 ppm, 100 ppm to 2,000 ppm, 100 ppm to 1,500 ppm, 100 ppm to 1,250 ppm, or 100 ppm to 1,000 ppm), 150 ppm to 10,000 ppm (e.g., 150 ppm to 5,000 ppm, 150 ppm to 4,000 ppm, 150 ppm to 3,000 ppm, 150 ppm to 2,000 ppm, 150 ppm to 1,500 ppm, 150 ppm to 1,250 ppm, or 150 ppm to 1,000 ppm), 200 ppm to 10,000 ppm (e.g., 200 ppm to 5,000 ppm, 200 ppm to 4,000 ppm, 200 ppm to 3,000 ppm, 200 ppm to 2,000 ppm, 200 ppm to 1,500 ppm, 200 ppm to 1,250 ppm, or 200 ppm to 1,000 ppm), 250 ppm to 10,000 ppm (e.g., 250 ppm to 5,000 ppm, 250 ppm to 4,000 ppm, 250 ppm to 3,000 ppm, 250 ppm to 2,000 ppm, 250 ppm to 1,500 ppm, 250 ppm to 1,250 ppm, or 250 ppm to 1,000 ppm), based on the total weight of the polymer composition. If the polymer composition comprises more than one salt of cyclopentylphosphonic acid, each salt of cyclopentylphosphonic acid can be present in the polymer composition in one of the amounts recited above, or the combined amount of all salts of cyclopentylphosphonic acid present in the polymer composition can fall within one of the ranges recited above. Preferably, when the polymer composition comprises more than one salt of cyclopentylphosphonic acid, the combined amount of all salts of cyclopentylphosphonic acid present in the polymer composition falls within one of the ranges recited above.

The salts of cyclopentylphosphonic acid suitable for use in the compositions of the invention can be made by any suitable process. For example, the salts can be made by reacting in an aqueous medium cyclopentylphosphonic acid and a metal base, such as a metal hydroxide (e.g., calcium hydroxide, sodium hydroxide, potassium hydroxide, magnesium hydroxide) or a metal oxide (e.g., calcium oxide or zinc oxide). The salts of cyclopentylphosphonic acid made by such a process can be hydrates (e.g., calcium cyclopentylphosphonate monohydrate). Such hydrate salts can be dehydrated by heating the salt to a sufficiently high temperature. Some of such dehydrated salts may be sufficiently unstable that they rehydrate upon exposure to atmospheric moisture, while others, such as calcium cyclopentylphosphonate (i.e., anhydrous calcium cyclopentylphosphonate) will remain dehydrated even if exposed to atmospheric moisture.

The polymer composition of the invention can contain other polymer additives in addition to the aforementioned salt(s) of cyclopentylphosphonic acid. Suitable additional polymer additives include, but are not limited to, antioxidants (e.g., phenolic antioxidants, phosphite antioxidants, and combinations thereof), antiblocking agents (e.g., amorphous silica and diatomaceous earth), pigments (e.g., organic pigments and inorganic pigments) and other colorants (e.g., dyes and polymeric colorants), fillers and reinforcing agents (e.g., glass, glass fibers, talc, calcium carbonate [e.g., aragonite], and magnesium oxysulfate whiskers), nucleating agents, clarifying agents, acid scavengers (e.g., metal salts of fatty acids, such as the metal salts of stearic acid, and hydrotalcite-like materials), polymer processing additives (e.g., fluoropolymer polymer processing additives), polymer cross-linking agents, slip agents (e.g., fatty acid amide compounds derived from the reaction between a fatty acid and ammonia or an amine-containing compound), fatty acid ester compounds (e.g., fatty acid ester compounds derived from the reaction between a fatty acid and a hydroxyl-containing compound, such as glycerol, diglycerol, and combinations thereof), polymer modifiers (e.g., hydrocarbon resin modifiers such as those sold under the Oppera^{™} tradename by Exxon Mobil Corporation), and combinations of the foregoing.

Polymer compositions comprising a heterophasic polyolefin polymer (e.g., a polypropylene impact copolymer) also can contain a compatibilizing agent that forms bonds between polymers in each phase of the heterophasic polyolefin polymer (e.g., between propylene polymers in the continuous phase and ethylene polymers in the discontinuous phase of a polypropylene impact copolymer). These bonds between polymers in each phase of the heterophasic polyolefin polymer are formed when the polymer composition is melt mixed/compounded in such a way as to generate free carbon radicals in the polymer composition (e.g., when the polymer composition is melt mixed/compounded with an organic peroxide). Suitable examples of such compatibilizing agents include, but are not limited to, the compatibilizing agents described in U.S. Patent Nos. 9,410,035; 9,879,134; 9,914,825; 10,100,187; 10,273,346; 10,400,096; 10,590,270; 10,745,538; and 11,248,114 and U.S. Patent Application Publication Nos. 2021/0108052 A1 and 2021/0108038 A1, with diphenylfulvene and trimethylolpropane trisorbate (2,2-bis[(1,3-pentadienylcarbonyloxy)methyl]butyl 2,4-hexadienoate) being particularly preferred.

In a preferred embodiment, the polymer composition further comprises one or more acid scavengers. As noted above, suitable acid scavengers include metal salts of fatty acids and hydrotalcite-like materials (e.g., synthetic hydrotalcites). Suitable metal salts of fatty acids include, but are not limited to, the metal salts of C₁₂-C₂₂ fatty acids (e.g., saturated C₁₂-C₂₂ fatty acids), such as stearic acid. In a preferred embodiment, the acid scavenger is selected from the group consisting of the calcium, zinc, potassium, and lanthanum salts of stearic acid, with zinc stearate being particularly preferred. Hydrotalcite-like materials suitable for use as acid scavengers include, but are not limited to, the synthetic hydrotalcite materials (CAS No. 11097-59-9) sold by Kisuma Chemicals under the "DHT-4A" and "DHT-4V" tradenames.

The salt(s) of cyclopentylphosphonic acid and the acid scavenger can be present in the polymer composition in any suitable relative amounts. For example, the salt(s) of cyclopentylphosphonic acid and the acid scavenger can be present in the polymer composition in a ratio (salt(s) of cyclopentylphosphonic acid to acid scavenger) of about 10:1 to about 1:10 based on the weight of the salt(s) of cyclopentylphosphonic acid and the acid scavenger in the polymer composition. More preferably, the salt(s) of cyclopentylphosphonic acid and the acid scavenger are present in the polymer composition in a ratio (salt(s) of cyclopentylphosphonic acid to acid scavenger) of about 4:1 to about 1:4, about 3:1 to about 1:3 (e.g., about 3:1 to about 1:1 or about 3:1 to about 2:1), about 1:1 to about 1:4, or about 1:1 to about 1:3 based on the weight of the salt(s) of cyclopentylphosphonic acid and the acid scavenger in the polymer composition. In a particularly preferred embodiment, the salt(s) of cyclopentylphosphonic acid and the acid scavenger are present in the polymer composition in a ratio of about 2:1 based on the weight of the salt(s) of cyclopentylphosphonic acid and the acid scavenger in the polymer composition (e.g., about 2 parts by weight anhydrous calcium cyclopentylphosphonate to 1 part by weight zinc stearate). In another particularly preferred embodiment, the salt(s) of cyclopentylphosphonic acid and the acid scavenger are present in the polymer composition in a ratio of about 3:1 based on the weight of the salt(s) of cyclopentylphosphonic acid and the acid scavenger in the polymer composition (e.g., about 3 parts by weight anhydrous calcium cyclopentylphosphonate to 1 part by weight zinc stearate).

As noted above, the polymer composition of the invention can contain other nucleating agents in addition to the salt(s) of cyclopentylphosphonic acid described above. Suitable nucleating agents include, but are not limited to, 2,2'-methylene-bis-(4,6-di-*tert*-butylphenyl) phosphate salts (e.g., sodium 2,2'-methylene-bis-(4,6-di-*tert*-butylphenyl) phosphate or hydroxyaluminum bis(2,2'-methylene-bis-(4,6-di-*tert*-butylphenyl)phosphate), bicyclo[2.2.1]heptane-2,3-dicarboxylate salts (e.g., disodium bicyclo[2.2.1]heptane-2,3-dicarboxylate or calcium bicyclo[2.2.1]heptane-2,3-dicarboxylate), cyclohexane-1,2-dicarboxylate salts (e.g., calcium cyclohexane-1,2-dicarboxylate, monobasic aluminum cyclohexane-1,2-dicarboxylate, dilithium cyclohexane-1,2-dicarboxylate, or strontium cyclohexane-1,2-dicarboxylate), glycerolate salts (e.g., zinc glycerolate), phthalate salts (e.g., calcium phthalate), phenylphosphonic acid salts (e.g., calcium phenylphosphonate), salts of branched alkyl phosphonic acids (e.g., calcium t-butylphosphonate monohydrate), and combinations thereof. For the bicyclo[2.2.1]heptane-2,3-dicarboxylate salts and the cyclohexane-1,2-dicarboxylate salts, the carboxylate moieties can be arranged in either the *cis-* or *trans-*configuration, with the *cis-* configuration being preferred.

As noted above, the polymer composition of the invention can also contain a clarifying agent. Suitable clarifying agents include, but are not limited to, trisamides and acetal compounds that are the condensation product of a polyhydric alcohol and an aromatic aldehyde. Suitable trisamide clarifying agents include, but are not limited to, amide derivatives of benzene-1,3,5-tricarboxylic acid, derivatives of *N*-(3,5-bis-formylamino-phenyl)-formamide (e.g., *N*-[3,5-bis-(2,2-dimethyl-propionylamino)-phenyl]-2,2-dimethyl-propionamide), derivatives of 2-carbamoyl-malonamide (e.g., *N,N'*-bis-(2-methyl-cyclohexyl)-2-(2-methyl-cyclohexylcarbamoyl)-malonamide), and combinations thereof. As noted above, the clarifying agent can be an acetal compound that is the condensation product of a polyhydric alcohol and an aromatic aldehyde. Suitable polyhydric alcohols include acyclic polyols such as xylitol and sorbitol, as well as acyclic deoxy polyols (e.g., 1,2,3-trideoxynonitol or 1,2,3-trideoxynon-1-enitol). Suitable aromatic aldehydes typically contain a single aldehyde group with the remaining positions on the aromatic ring being either unsubstituted or substituted. Accordingly, suitable aromatic aldehydes include benzaldehyde and substituted benzaldehydes (e.g., 3,4-dimethyl-benzaldehyde or 4-propyl-benzaldehyde). The acetal compound produced by the aforementioned reaction can be a mono-acetal, di-acetal, or tri-acetal compound (i.e., a compound containing one, two, or three acetal groups, respectively), with the di-acetal compounds being preferred. Suitable acetal-based clarifying agents include, but are not limited to, the clarifying agents disclosed in U.S. Patent Nos. 5,049,605; 7,157,510; and 7,262,236.

The polymer composition of the invention can be produced by any suitable method or process. For example, the polymer composition can be produced by simple mixing of the individual components of the polymer composition (e.g., polymer, salt(s) of cyclopentylphosphonic acid, and other additives, if any). The polymer composition can also be produced by mixing the individual components under high shear or high intensity mixing conditions. The polymer composition of the invention can be provided in any form suitable for use in further processing to produce an article of manufacture from the thermoplastic polymer composition. For example, the thermoplastic polymer compositions can be provided in the form of a powder (e.g., free-flowing powder), flake, pellet, prill, tablet, and agglomerate.

The polymer composition of the first embodiment invention can take the form of a masterbatch composition designed for addition or let-down into a virgin polymer (e.g., an unnucleated polypropylene polymer). In such an embodiment, the polymer composition will generally contain a higher amount of the salt(s) of cyclopentylphosphonic acid as compared to a thermoplastic polymer composition intended for use in the formation of an article of manufacture without further dilution or addition to a virgin thermoplastic polymer. For example, the salt(s) of cyclopentylphosphonic acid can be present in such a polymer composition in an amount of about 0.5 wt.% or more (e.g., about 1 wt.% or more or about 2 wt.% or more). The maximum amount of the salt(s) in the masterbatch is only limited by manufacturing and processing considerations, though the amount would typically be about 50 wt.% or less. Thus, in a series of preferred embodiments, the salt(s) of cyclopentylphosphonic acid can be present in the masterbatch in an amount of about 0.5 wt.% to about 50 wt.% (e.g., about 0.5 wt.% to about 40 wt.%, about 0.5 wt.% to about 30 wt.%, about 0.5 wt.% to about 25 wt.%, about 0.5 wt.% to about 20 wt.%, about 0.5 wt.% to about 15 wt.%, about 0.5 wt.% to about 10 wt.%, about 0.5 wt.% to about 5 wt.%, or about 0.5 wt.% to about 4 wt.%), about 1 wt.% to about 50 wt.% (e.g., about 1 wt.% to about 40 wt.%, about 1 wt.% to about 30 wt.%, about 1 wt.% to about 25 wt.%, about 1 wt.% to about 20 wt.%, about 1 wt.% to about 15 wt.%, about 1 wt.% to about 10 wt.%, about 1 wt.% to about 5 wt.%, or about 1 wt.% to about 4 wt.%), or about 2 wt.% to about 50 wt.% (e.g., about 2 wt.% to about 40 wt.%, about 2 wt.% to about 30 wt.%, about 2 wt.% to about 25 wt.%, about 2 wt.% to about 20 wt.%, about 2 wt.% to about 15 wt.%, about 2 wt.% to about 10 wt.%, about 2 wt.% to about 5 wt.%, or about 2 wt.% to about 4 wt.%), based on the total weight of the polymer composition. If the masterbatch composition comprises more than one salt of cyclopentylphosphonic acid, each salt of cyclopentylphosphonic acid can be present in the masterbatch composition in one of the amounts recited above, or the combined amount of all salts of cyclopentylphosphonic acid present in the masterbatch composition can fall within one of the ranges recited above. Preferably, when the masterbatch composition comprises more than one salt of cyclopentylphosphonic acid, the combined amount of all salts of cyclopentylphosphonic acid present in the masterbatch composition falls within one of the ranges recited above. In such a masterbatch composition, any additional additives contained in the composition will likewise be present in higher amounts that are intended to deliver the desired concentration when the masterbatch composition is let-down in the virgin polymer at the desired/specified ratio.

The polymer composition of the invention is believed to be useful in producing thermoplastic polymer articles of manufacture. The polymer composition of the invention can be formed into a desired thermoplastic polymer article of manufacture by any suitable technique, such as injection molding (e.g., thin-wall injection molding, multicomponent molding, overmolding, or 2K molding), blow molding (e.g., extrusion blow molding, injection blow molding, or injection stretch blow molding), extrusion (e.g., fiber extrusion, tape [e.g., slit tape] extrusion, sheet extrusion, film extrusion, cast film extrusion, pipe extrusion, extrusion coating, or foam extrusion), thermoforming, rotomolding, film blowing (blown film), film casting (cast film), compression molding, extrusion compression molding, extrusion compression blow molding, and the like. Thermoplastic polymer articles made using the polymer composition of the invention can be comprised of multiple layers (e.g., multilayer blown or cast films or multilayer injection molded articles), with one or any suitable number of the multiple layers containing a polymer composition of the invention.

The polymer composition of the invention can be used to produce any suitable article of manufacture. Suitable articles of manufacture include, but are not limited to, medical devices (e.g., pre-filled syringes for retort applications, intravenous supply containers, and blood collection apparatus), food packaging, liquid containers (e.g., containers for drinks, medications, personal care compositions, shampoos), apparel cases, microwavable articles, shelving, cabinet doors, mechanical parts, automobile parts, sheets, pipes, tubes, rotationally molded parts, blow molded parts, films, and fibers.

The salts of cyclopentylphosphonic acid (e.g., anhydrous calcium cyclopentylphosphonate) have been observed to rapidly nucleate polyolefin polymers. Thus, the polymer composition of the invention, which contains a polyolefin and at least one salt of cyclopentylphosphonic acid, exhibits relatively high crystallization temperatures and relatively fast crystallization rates (e.g., low crystallization half-times). For that reason, the polymer composition of the invention is believed to be especially well-suited for use in making articles having relatively thin walls, such as thin-wall injection molded articles (i.e., injection molded articles having a wall thickness of about 25 mils or less (0.62 mm or less)). In making such articles, the molded articles rapid cool after they are formed due to their low mass and high surface area. Many conventional nucleating agents, which nucleate the polyolefin polymer at lower temperatures and appreciably slower rates than the salts of cyclopentylphosphonic acid, are unable to effectively nucleate the polymer from which these thin-walled articles are made. (The polymer cools from the molten state before such conventional nucleating agents can completely and/or effectively nucleate the polymer.) Accordingly, using the polymer composition of the invention enables the production of highly nucleated, thin-walled articles (e.g., thin-wall injection molded articles).

Further, the salts of cyclopentylphosphonic acid (e.g., anhydrous calcium cyclopentylphosphonate) generally induce relatively low and isotropic shrinkage when used to nucleate polyolefin polymers (e.g., polypropylene homopolymers, polypropylene random copolymers, and/or polypropylene impact copolymers). This low and isotropic shrinkage combined with the exceptionally rapid polymer nucleation are believed to make the salts of cyclopentylphosphonic acid (e.g., anhydrous calcium cyclopentylphosphonate) very useful in nucleating polymer compositions that contain fillers, reinforcing agents, and/or pigments, especially those fillers, reinforcing agents, and/or pigments that can also nucleate the polyolefin polymer. In such a polymer composition, the salts of cyclopentylphosphonic acid act so quickly that they nucleate the polyolefin polymer before the filler/reinforcing agent/pigment can nucleate the polyolefin. This effect, which is commonly referred to as "levelling" or "pigment levelling," is particularly beneficial because many such fillers, reinforcing agents, and/or pigments induce uneven (anisotropic) and/or high shrinkage when they nucleate a polyolefin polymer, which can lead to warping of articles made from the polymer composition.

Thus, in a preferred embodiment, the invention provides a polymer composition comprising a polyolefin polymer, a salt of cyclopentylphosphonic acid, and an additive selected from the group consisting of fillers, reinforcing agents, and/or pigments. In such an embodiment, the polyolefin polymer can be any of the polyolefin polymers described above, but preferably is a polypropylene polymer (e.g., a polypropylene homopolymer, a polypropylene random copolymer, and/or a polypropylene impact copolymer). In one particularly preferred embodiment of such a polymer composition, the polyolefin polymer is a polypropylene impact copolymer, such as one of the polypropylene impact copolymers described above. The salt of cyclopentylphosphonic acid can be any of the salts described above, with anhydrous calcium cyclopentylphosphonate being particularly preferred. The salt of cyclopentylphosphonic acid can be present in any of the amounts described above, with a range of 1,000 ppm to 2,000 ppm being particularly preferred. The additive in this embodiment of the polymer composition preferably is an additive that increases the stiffness of the polyolefin polymer, such as glass fibers, talc, calcium carbonate (e.g., aragonite), and magnesium oxysulfate whiskers. In a particularly preferred embodiment, the stiffness additive is talc. The polymer composition can contain any suitable amount of such stiffness additive, but generally the stiffness additive will be present in the polymer composition in an amount of about 1 wt.% or more (e.g., about 2 wt.% or more, about 3 wt.% or more, about 4 wt.% or more, or about 5 wt.% or more), based on the total weight of the polymer composition. The stiffness additive preferably is present in an amount of about 15 wt.% or less (e.g., about 10 wt.% or less), based on the total weight of the polymer composition. Thus, the stiffness additive preferably is present in the polymer composition in an amount of about 1 wt.% to about 15 wt.% (e.g., about 2 wt.% to about 15 wt.%, about 3 wt.% to about 15 wt.%, about 4 wt.% to about 15 wt.%, or about 5 wt.% to about 15 wt.%) or about 1 wt.% to about 10 wt.% (e.g., about 2 wt.% to about 10 wt.%, about 3 wt.% to about 10 wt.%, about 4 wt.% to about 10 wt.%, or about 5 wt.% to about 10 wt.%), based on the total weight of the polymer composition. In a particularly preferred embodiment of such a polymer composition, the polymer composition comprises a polypropylene polymer (more preferably, a polypropylene impact copolymer), about 1,000 ppm to about 2,000 ppm of anhydrous calcium cyclopentylphosphonate, and about 1 wt.% to about 10 wt.% of talc.

In addition to the rapid nucleation and desirable shrinkage properties described above, some salts of cyclopentylphosphonic acid (e.g., anhydrous calcium cyclopentylphosphonate) have been observed to induce a strong preference for transverse direction lamellae growth in articles made from polyolefin polymers (e.g., polyethylene). In this context, the "transverse direction" is perpendicular to both the machine direction (i.e., the direction in which the molten polymer exits the die and/or flows into the void(s) of a mold) and the thickness of the molded article. Preferential transverse direction lamellae growth results in a higher transverse direction modulus, which can be desirable in circular, center-gated injection molded articles. Accordingly, the polymer compositions of the invention, such as those embodiments comprising a polyethylene polymer and anhydrous calcium cyclopentylphosphonate, are believed to be particularly well-suited for use in making injection molded articles (e.g., circular, center-gated injection molded articles). Additionally, preferential transverse direction lamellae growth results in improvements in the gas barrier properties (e.g., water vapor and/or oxygen barrier properties) of polyolefins (e.g., polyethylene, more specifically high-density polyethylene). Accordingly, the polymer compositions of the invention, such as those embodiments comprising a polyethylene polymer and anhydrous calcium cyclopentylphosphonate, are believed to be particularly well-suited for use in making films and other articles having improved gas barrier properties (e.g., lower water vapor transmission rates and/or oxygen transmission rates).

Alternatively, some salts of cyclopentylphosphonic acid (e.g., dilithium cyclopentylphosphonate) have been observed to induce a strong preference for normal direction lamellae growth in articles made from polyolefin polymers (e.g., polyethylene). In this context, the "normal direction" is perpendicular to the machine direction (i.e., the direction in which the molten polymer exits the die and/or flows into the void(s) of a mold) and parallel to the thickness of the molded article. Preferential normal direction lamellae growth can be especially beneficial at improving crack resistance in pipes. Normal direction lamellae growth can also improve drop impact resistance of injection molded parts and films (e.g., blown films). Accordingly, the polymer compositions of the invention, such as those embodiments comprising a polyethylene polymer and dilithium cyclopentylphosphonate, are believed to be particularly well-suited for use in making pipe (e.g., high-density polyethylene pipe), injection molded articles, and films (e.g., blown films).

The following examples further illustrate the subject matter described above but, of course, should not be construed as in any way limiting the scope thereof.

### EXAMPLE 1

This example demonstrates the synthesis of a salt of cyclopentylphosphonic acid suitable for use in the polymer compositions described herein.

Dichloromethane (DCM, 916 g), aluminum chloride powder (223.4 g, 1.67 moles), and PCl₃ (230.4 g, 1.67 moles) were added to a 5 L round bottom flask equipped with overhead stirring, nitrogen bubbler, reflux condenser, and an addition funnel. The resulting mixture was stirred and then cooled with dry ice. Bromocyclopentane (250 g, 1.67 moles) was added dropwise *via* the addition funnel over a period of approximately 20 minutes. The dry ice bath was removed, a mantle added, and the mixture was heated to 35°C and stirred for 2 hours. This reaction mixture was then poured into a bucket of ice water (2 kg) which resulted in some HCl vapor being formed. The biphasic solution was separated in a 2L separatory funnel, and the aqueous phase was extracted three times using 100 mL of DCM for each extraction. The combined organic layer was then dried over anhydrous magnesium sulfate. GC analysis of the recovered organic layer showed a reaction product containing approximately 86.8% cyclopentylphosphonic dichloride, approximately 12.32% cyclopentylphosphonic bromide chloride, and approximately 0.87% cyclopentylphosphonic dibromide.

985.8 g of the recovered organic layer described above (an approximately 21.88 wt.% solution containing 215.69 g active dichloride and bromides, 1.116 moles) was added to a 5 L three-necked round bottom flask fitted with a mechanical stirrer, reflux condenser, and thermocouple. The contents of the flask were stirred, and a solution of NaOH (357.22 g 50% solution, 178.61 g active NaOH, 4.46 moles) was added. The caustic solution was warm to start with, and the mixture began to exotherm vigorously up to 49 °C. An ice bath was placed underneath the flask, and the temperature began to drop slowly. After stirring for approximately 2 hours, the pH of the water layer was 11, indicating that the hydrolysis was complete.

The aqueous layer was separated via funnel and added to a 10 L glass beaker fitted with a Teflon stir paddle. A solution of calcium chloride (123.85 g, 1.116 moles) in water (4 L) was added portionwise to the stirred aqueous layer. A white precipitate appeared immediately, which was suction filtered, washed with copious amounts of hot water, and dried at 110 °C overnight to produce a fine white powder (162.1 g of calcium cyclopentylphosphonate monohydrate (CaCPP), 77% yield). FTIR and GC analysis confirmed complete conversion. The powder was ground and heated further in an oven at 200 °C to remove the bound water of hydration, which yielded anhydrous calcium cyclopentylphosphonate.

### EXAMPLE 2

This example demonstrates the synthesis of a salt of cyclopentylphosphonic acid suitable for use in the polymer compositions described herein.

Cyclopentylphosphonic acid (20 g, 0.133 moles) and deionized water (250 mL) were added to a 500-mL beaker, and the resulting mixture was stirred until homogenous. To this solution, a 50% solution of NaOH in water (21.28 g, 10.64 g, 0.266 moles) was added, and a solution was obtained. The water was removed *via* rotary evaporation to give a white crystalline solid, disodium cyclopentylphosphonate (NaCPP) (22.63 g, 88.4% yield). FTIR was consistent with the expected product.

### EXAMPLE 3

This example demonstrates the synthesis of a salt of cyclopentylphosphonic acid suitable for use in the polymer compositions described herein.

Cyclopentylphosphonic acid (10 g, 0.066 moles) and deionized water (100 mL) were added to a 250 mL beaker, and the resulting mixture was stirred until homogenous. To this solution, lithium hydroxide monohydrate (5.59 g, 0.133 moles) was added, and a solution was obtained. The water was allowed to evaporate in a hood at room temperature to give a white crystalline solid, dilithium cyclopentylphosphonate (LiCPP) (10.17 g, 95.1%). FTIR was consistent with the expected product.

### EXAMPLE 4

This example demonstrates the synthesis of a salt of cyclopentylphosphonic acid suitable for use in the polymer compositions described herein.

Cyclopentylphosphonic acid (10 g, 0.066 moles) and deionized water (100 mL) were added to a 250 mL beaker, and the resulting mixture was stirred until homogenous. To this solution, magnesium hydroxide (3.84 g, 0.066 moles) was added, and a slurry was obtained. The solids dissolved slowly to give a solution. The water was allowed to evaporate in a hood at room temperature to give a white crystalline solid, magnesium cyclopentylphosphonate (MgCPP) (12.1 g, approximately 100 % yield). FTIR was consistent with the expected product.

### EXAMPLE 5

This example demonstrates the synthesis of a salt of cyclopentylphosphonic acid suitable for use in the polymer compositions described herein.

Cyclopentylphosphonic acid (10 g, 0.066 moles) and deionized water (100 mL) were added to a 250 mL beaker, and the resulting mixture was stirred until homogenous. To this solution, a slurry of zinc oxide (5.37 g, 0.066 moles) in water (10 mL) was added, and a slurry was obtained. The slurry was stirred at room temperature overnight. The temperature of the slurry was then increased to 60 °C, and stirred for an additional 5 hours, at which time a turbid solution was obtained. The solution was suction filtered, and the filtrate was allowed to evaporate at room temperature to afford a crystalline white solid, zinc cyclopentylphosphonate (ZnCPP) (13.8 g, 98% yield). FTIR was consistent with the expected product.

### EXAMPLE 6

This example demonstrates the production of polymer compositions according to the invention, the production of thin-wall injection molded articles made from such polymer compositions, and certain physical properties of such thin-wall injection molded articles.

Several polymer compositions were made using two commercially available polypropylene resins. The samples labeled "6A" were made with Pro-fax 6301 polypropylene homopolymer from LyondellBasell, which is reported to have a melt flow rate of 12 g/10 min. The samples labeled "6B" were made with SA849 polypropylene random copolymer (RCP) from LyondellBasell, which is also reported to have a melt flow rate of 12 g/10 min. All of the samples were stabilized with 500 ppm of Irganox^{®} 1010 antioxidant and 1,000 ppm of Irgafos^{®} 168 antioxidant, both of which are available from BASF. Some polymer compositions further included calcium cyclopentylphosphonate ("CaCPP"), calcium t-butylphosphonate monohydrate ("CaTBP"), zinc stearate ("ZnSt"), and/or DHT-4A from Kisuma Chemicals. The amounts of these additional components are noted in the tables that follow.

Each of the polymer compositions was prepared by high intensity mixing of the polypropylene resin and additives and then melt compounding the mixture using a Deltaplast single screw extruder. The screw speed of the extruder was set at 126 rpm. The first zone of the extruder barrel was set at 200 °C, the second zone of the extruder barrel was set at 215 °C, and the third through sixth zones of the extruder barrel were all set at 230 °C. After melt compounding, each extrudate was cut into pellets for subsequent processing.

The extruded pellets of each polymer composition were then injection molded into 16 U.S. fluid ounce (470 mL) deli cups on a Husky injection molding machine with all barrels set at 220 °C, an injection rate of 140 mm/s, a back pressure of 50 psi (0.14 MPa), and the mold cooling water set at 45 °C. The deli cups had a circular base measuring 3.637 inches (92.38 mm) in diameter, a circular open at the top having a rim measuring 4.266 inches (108.4 mm) in diameter at the inner edge of the rim and 4.612 inches (117.1 mm) in diameter at the outer edge of the rim. The deli cups had a wall thickness of 26 mil (0.66 mm).

After molding, the deli cups were then tested to determine several physical properties. The compression top load was measured in accordance with ASTM D2659. The haze was measured in accordance with ASTM D1003. Thermal properties of the specimens were measured by differential scanning calorimetry using a Mettler Toledo differential scanning calorimeter (DSC) unit (DSC 3+ STAR system) and analyzed by Mettler STARe evaluation software. For crystallization temperature measurements, specimens were heated up from 50 °C to 220 °C at a rate of 20 °C/min to remove all the thermal history. After holding the specimen at 220 °C for 2 minutes to equilibrate, the specimen was cooled to 50 °C at a rate of 20 °C/min to examine the crystallization behavior. Crystallization temperature (T_{c}) is reported as the peak value on the cooling curve. For the crystallization half-time measurements, the specimen was heated from 50 °C to 220 °C at a rate of 20 °C/min to remove all the thermal history, held at 220 °C for 2 minutes to equilibrate, and then cooled to 140 °C at a rate of 300 °C/min and held at that temperature for 30 minutes. The crystallization half-time was calculated from the DSC curve using the software. The results of these measurements are reported in Tables 1 and 2 below.

**Table 1. Additive concentrations for Samples 6A-1 to 6A-5 and physical properties of deli cups made from Samples 6A-1 to 6A-5.**

| **Sample** | **CaCPP (ppm)** | **CaTBP (ppm)** | **ZnSt (ppm)** | **Acid Scavenger** | **T_{1/2} (mins)** | **T_{c} (°C)** | **Top Load (N)** | **Haze (%)** |
|---|---|---|---|---|---|---|---|---|
| 6A-1 | | -- | -- | 600 ppm CaSt | >30 | 118 | 813.04 | 31.5 |
| 6A-2 | | 350 | 150 | 300 ppm DHT-4A | 3.77 | 125 | 1300.46 | 16.3 |
| 6A-3 | | 670 | 330 | 300 ppm DHT-4A | 4.24 | 126 | 1317.61 | 14.5 |
| 6A-4 | 350 | | 150 | 300 ppm DHT-4A | 2.55 | 127 | 1333.37 | 14.8 |
| 6A-5 | 670 | | 330 | 300 ppm DHT-4A | 2.25 | 127 | 1351.22 | 12.5 |

**Table 2. Additive concentrations for Samples 6B-1 to 6B-5 and physical properties of deli cups made from Samples 6B-1 to 6B-5.**

| **Sample** | **CaCPP (ppm)** | **CaTBP (ppm)** | **ZnSt (ppm)** | **Acid Scavenger** | **T_{c} (°C)** | **Top Load (N)** | **Haze (%)** |
|---|---|---|---|---|---|---|---|
| 6B-1 | | -- | -- | 600 ppm CaSt | 105 | 723.37 | 30.5 |
| 6B-2 | | 350 | 150 | 300 ppm DHT-4A | 113 | 864.35 | 13.2 |
| 6B-3 | | 670 | 330 | 300 ppm DHT-4A | 114 | 903.02 | 11.9 |
| 6B-4 | 350 | | 150 | 300 ppm DHT-4A | 116 | 860.58 | 13 |
| 6B-5 | 670 | | 330 | 300 ppm DHT-4A | 116 | 908.14 | 10.9 |

As can be seen from the data in Tables 1 and 2 above, the anhydrous calcium cyclopentylphosphonate ("CaCPP") was the most effective at nucleating both of the polypropylene polymers and was superior to the branched calcium alkylphosphonate ("CaTBP"). These nucleation effects are apparent from the shorter crystallization half-times, the higher crystallization temperatures, the higher compression top loads, and the lower haze values exhibited by all of the polymer compositions containing CaCPP as compared to their respective control polymers (i.e., the virgin polypropylene resin) and the polymer compositions containing CaTBP.

### EXAMPLE 7

This example demonstrates the production of polymer compositions according to the invention, the production of thermoformed articles from such polymer compositions, and certain physical properties of such thermoformed articles.

Polymer compositions were made using Polypropylene 3371 resin (a polypropylene homopolymer) from TotalEnergies, which has a reported melt flow rate of 2.8 g/10 min. Certain polymer compositions were nucleated with calcium t-butylphosphonate monohydrate ("CaTBP") and anhydrous calcium cyclopentylphosphonate ("CaCPP"), which were used in conjunction with an acid scavenger, such as zinc stearate ("ZnSt") or calcium stearate ("CaSt"). The amount of CaTBP, CaCPP, and acid scavenger used in each polymer composition is noted in the tables below. The 3371 resin and additives were high intensity mixed using a Henschel mixer prior to melt compounding as described below.

The polymer composition was melt compounded on a Werner & Pfleiderer zsk-40 twin screw extruder having a screw diameter of 40 mm and an L/D ratio of 37. The temperature of the first zone of the extruder barrel was set at 165 °C, the temperature of the second through sixth zones of the extruder barrel and the die zone were set at 175 °C. The extruder speed was set at 400 rpm, and the total output was approximately 55 kg/hr. The polymer strands exiting the extruder die were cooled in a water bath and then cut into pellets using a pelletizer.

The pelletized polymer compositions were then thermoformed into drink cups using a type A-T-20-G1 sheet line from Reifenhäuser coupled with a RDM 54K thermoformer from iLLig. The sheet line's extruder was set at 230 °C, and the die zone was set at 250 °C with a die gap of 1.5 mm. The screw rate was approximately 72 rpm. The sheet exiting the die was then transferred onto a set of three stacked chill rolls set at 65 °C, 75°C, and 65 °C. The sheet exiting the chill rolls had a thickness of 1.9 mm. The sheet was then indexed through the heating section of the thermoformer, which was set at 165 °C, to heat the sheet just below the melt temperature of the polymer composition. The sheet was then advanced to the molding section where it was thermoformed into drink cups that were then trimmed from the sheet and ejected from the thermoformer. The resulting drink cups had a base diameter of approximately 60 mm, a top rim diameter of approximately 94 mm, and a height of approximately 140 mm.

Specimens of the extruded sheet and thermoformed drink cups were taken for optical property and physical property testing as described below. Haze and clarity were measured pursuant to ASTM D1003 using a BYK haze-gard haze meter. For the thermoformed drink cups, the haze measurements were taken in an area that was 76.2 mm from the cup base and 25.4 mm from the top rim. Gloss was measured using a BYK single angle gloss meter, micro-gloss 20°. Measurements were taken from both sides of the specimen and the results averaged to obtain an average gloss reported in gloss units.

Thermal properties of the specimens were measured by differential scanning calorimetry as described in Example 6, except that the specimen was cooled to 135 °C at a rate of 300 °C/min when performing the crystallization half-time measurements.

Specimens for flexural modulus testing were cut from the extruded sheet using a Type 1 dog-bone cutting die described in ASTM D638-10. Specimens for testing were taken from the machine direction and transverse direction. The specimens were then conditioned for at least 40 hours at approximately 23 °C and approximately 50% relative humidity. Flexural modulus testing was then performed in accordance with ASTM D790-10 using a Criterion Model 43 electromechanical test system from MTS equipped with a three-point bend flexure set-up (Model 642.01A). The depth of beam movement was recorded to calculate strain. The 1% Secant modulus was calculated based on the ratio of stress and strain when strain reaches 1%.

The cup ovality is a parameter indicating the difference in the cup diameter measured in the machine direction (parallel to the direction the sheet exited the die) and transverse direction (transverse to the direction the sheet exited the die). The thermoformed cups were conditioned at least 24 hours before measurement (in inches) of the outer rim diameter in the machine direction (D_{MD}) and the transverse direction (D_{TD}) using a caliper. The cup ovality, which was reported in mils, was calculated using the following equation: $Cup ovality = \left({D}_{MD}-{D}_{TD}\right) \times 1000$ Rim shrinkage is a parameter indicating the difference between the diameter of the rim of the thermoformed cup and the diameter of the corresponding part of the mold from which the cup was made. The diameter of the mold was 3.7427 inches. The average diameter of the cup rim (D_{avg}) was measured (in inches) using a spring tension band. Rim shrinkage of the cup, which was reported in mils, was calculated using the following equation $Rim shrinkage = \left(3.7427-{D}_{avg}\right) \times 1000 .$

The compressive strength of the thermoformed cup's side wall was measured using a probe to determine the force of resistance to deflection. A cup was positioned horizontally on its side using a cup jig mounted to a platen plate of the MTS Criterion Model 43 electromechanical test system. The probe, moving at a constant vertical speed of 25 mm/min, pressed perpendicularly downward onto the cup side wall for a total wall deflection distance of 10 mm. Once the desired total wall deflection distance was reached, the resulting resistance force was recorded as the side wall force. The top load compression of the thermoformed cup (ASTM D 2659) was measured by inverting the cup and mechanically pressing downward until collapse failure of the cup resistance was detected. The cup was placed rim downward onto the stationary base plate of the MTS Criterion Model 43 electromechanical test system. A vented base plate was used to allow air to escape from inside the cup as it was compressed. A top compression plate, moving at a constant rate of 50 mm/min, pressed down on the cup until the collapse was detected. The peak force recorded at collapse was reported as top load.

**Table 3. Optical properties of 1.9 mm sheet.**

| **Sample** | **CaCPP (ppm)** | **CaTBP** | **Acid Scavenger** | **Haze (%)** | **Clarity (%)** | **Average Gloss (GU)** |
|---|---|---|---|---|---|---|
| 7A | -- | -- | -- | 94.5 | 12.6 | 70 |
| 7B | 268 | -- | 134 ppm ZnSt | 71.9 | 93.1 | 81.6 |
| 7C | -- | 268 | 134 ppm ZnSt | 89.9 | 93.5 | 80.9 |

**Table 4. Optical Properties of thermoformed drink cups.**

| **Sample** | **CaCPP (ppm)** | **CaTBP (ppm)** | **Acid Scavenger** | **Haze (%)** | **Clarity (%)** | **Average Gloss (GU)** |
|---|---|---|---|---|---|---|
| 7A | -- | -- | -- | 6.7 | 82.4 | 55 |
| 7B | 268 | -- | 134 ppm ZnSt | 2.37 | 97.8 | 108 |
| 7C | -- | 268 | 134 ppm ZnSt | 2.78 | 98.3 | 107 |

**Table 5. Physical properties of thermoformed drink cups.**

| **Sample** | **CaCPP (ppm)** | **CaTBP (ppm)** | **Acid Scavenger** | **Ovality (mil)** | **Rim Shrinkage (%)** | **Side Wall (N)** | **Top load (N)** |
|---|---|---|---|---|---|---|---|
| 7A | -- | -- | -- | 5.1 | 2.0 | 4.7 | 257 |
| 7B | 268 | -- | 134 ppm ZnSt | 18.2 | 2.0 | 4.3 | 229.5 |
| 7C | -- | 268 | 134 ppm ZnSt | 11.1 | 2.15 | 4.3 | 255 |

**Table 6. Thermal Properties of 1.9 mm sheet.**

| **Sample** | **CaCPP (ppm)** | **CaTBP (ppm)** | **Acid Scavenger** | **Tc (°C)** | **T_{1/2} (min.)** |
|---|---|---|---|---|---|
| 7A | -- | -- | -- | 114.5 | 8.17 |
| 7B | 268 | -- | 134 ppm ZnSt | 126 | 0.86 |
| 7C | -- | 268 | 134 ppm ZnSt | 125.5 | 0.94 |

As can be seen from the data in Tables 3-6, the anhydrous calcium cyclopentylphosphonate ("CaCPP") was particularly advantaged over the calcium t-butylphosphonate ("CaTBP") in the optical improvements in both extruded sheet and thermoformed cups. While the physical properties of the molded cups were similar, the CaCPP imparted a higher polymer crystallization temperature (T_{c}) and a reduced crystallization half-time (T_{1/2}) than the branched CaTBP additive, an important advantage regarding cycle time reductions not only in thermoforming, but other processes as well.

### EXAMPLE 8

This example demonstrates the production of several polymer compositions according to the invention, the production of injection molded articles from such polymer compositions, and certain physical properties exhibited by such injection molded articles.

Seven polymer compositions were produced for the injection molding runs described herein. Sample 8A is unnucleated Pro-fax 6301 polypropylene homopolymer from LyondellBasell. Samples 8B-8G were made from a mixture of Pro-fax 6301, 1,000 ppm of each nucleating agent, 500 ppm of zinc stearate ("ZnSt"), 300 ppm of Irganox^{®} 1010 antioxidant, and 600 ppm of Irgafos^{®} 168 antioxidant. The nucleating agent used in each of Samples 8B-8G is identified in Table 7 below. Samples 8B-8G were separately mixed, melt compounded, and pelletized as described in Example 6.

A portion of each polymer composition was injection molded into ASTM flexural bars in accordance with ASTM D4101-11 using a 40-ton Arburg injection molder. Another portion of each polymer composition was also injection molded into ISO shrinkage plaques in accordance with ISO 294 using a 55-ton Arburg injection molder. Lastly, another portion of each polymer composition was injection molded into plaques measuring 77 mm long, 50 mm wide, and 1.27 mm (50 mil) thick on the 40-ton Arburg injection molder.

Heat deflection temperature (HDT) was measured in accordance with ASTM D 648-07 (using 0.4555 MPa stress) on the injection molded ASTM flexural bars described above. Notched Izod impact was measured in accordance with ASTM D 256-10 on an Instron 9050 pendulum impact tester using injection molded ASTM flexural bars that had been trimmed and notched as specified in ASTM D 256-10. Thermal properties of the specimens were measured by differential scanning calorimetry as described in Example 6, except that the specimen was cooled to 135 °C at a rate of 300 °C/min when performing the crystallization half-time measurements.

Flexural modulus was measured in accordance with ASTM D790-10 using a Criterion Model 43 electromechanical test system from MTS equipped with a three-point bend flexure set-up (Model 642.01A). The flexural bars were conditioned for at least 40 hours at approximately 23 °C and approximately 50% relative humidity prior to testing. The bi-directional flexural modulus (in machine direction (MD) and transverse direction (TD)) were also measured in accordance with ASTM D790-10. The specimens for bi-directional flexural modulus, which were conditioned as described above, were trimmed from injection molded ISO shrinkage plaques. For the MD measurement, 9.2 mm of material was trimmed from the TD axis (leaving 50.8 mm [2 inches] in the TD direction) and the load was applied perpendicular to the flow direction. For the TD measurement, 9.2 mm of material was trimmed from the MD axis (leaving 50.8 mm [2 inches] in the MD direction) and the load was applied parallel to the flow direction.

Shrinkage of the injection molded ISO shrinkage plaques was measured in accordance with ISO 294 on plaques that had been conditioned for at least 48 hours at approximately 23 °C and approximately 50% relative humidity prior to testing. Shrinkage in the machine direction and transverse direction were calculated using the following equations: $MD% = \frac{{MD}_{mold} - {MD}_{specimen}}{{MD}_{mold}} \times 100 %$ $TD% = \frac{{TD}_{mold} - {TD}_{specimen}}{{TD}_{mold}} \times 100 %$ In the equations, MD_{mold} is the dimension of the mold in the machine direction, MD_{specimen} is the dimension of the specimen in the machine direction, TD_{mold} is the dimension of the mold in the transverse direction, and TD_{specimen} is the dimension of the specimen in the transverse direction. The isotropy index, which is a measure of how uniformly a part has shrunk, was calculated by dividing the machine direction shrinkage by the transverse direction shrinkage $Isotropy index = \frac{MD%}{TD%} .$ The results of the measurements described above are set forth in Tables 7-12 below.

**Table 7. Thermal and select physical properties of Samples 8A-8G in ASTM Flex Bars.**

| **Sample** | **Nucleating Agent** | **T_{c} (°C)** | **T_{1/2} (min)** | **Flex Modulus (MPa)** | **HDT (°C)** |
|---|---|---|---|---|---|
| 8A | -- | 119 | 4.23 | 1556 | 104 |
| 8B | CaTBP | 125 | 1.12 | 1713 | 107 |
| 8C | CaCPP | 130 | 0.35 | 1682 | 107 |
| 8D | LiCPP | 123 | 2.35 | 1636 | 107 |
| 8E | NaCPP | 123 | 2.01 | 1622 | 107 |
| 8F | MgCPP | 125 | 1.29 | 1655 | 108 |
| 8G | ZnCPP | 125 | 1.16 | 1644 | 106 |

**Table 8. Select physical properties of Samples 8A-8G in ISO shrinkage plaques.**

| **Sample** | **MD Flex Modulus (MPa)** | **TD Flex Modulus (MPa)** | **MD Shrinkage (%)** | **TD Shrinkage (%)** | **Isotropy** |
|---|---|---|---|---|---|
| 8A | 1675 | 1692 | 1.28 | 1.36 | 0.95 |
| 8B | 1956 | 1955 | 1.32 | 1.36 | 0.97 |
| 8C | 1917 | 1891 | 1.32 | 1.42 | 0.93 |
| 8D | 1811 | 1824 | 1.24 | 1.29 | 0.96 |
| 8E | 1801 | 1828 | 1.21 | 1.22 | 1 |
| 8F | 1860 | 1876 | 1.28 | 1.32 | 0.97 |
| 8G | 1835 | 1837 | 1.29 | 1.38 | 0.94 |

**Table 9. Select optical properties of Samples 8A-8G in ISO shrinkage plaques.**

| **Sample** | **Haze (%)** | **Clarity (%)** |
|---|---|---|
| 8A | 77.6 | 91 |
| 8B | 42.3 | 98.5 |
| 8C | 45.5 | 98.6 |
| 8D | 65 | 95.7 |
| 8E | 63.4 | 93.8 |
| 8F | 57.2 | 97.6 |
| 8G | 66.8 | 97.3 |

The data in Tables 7-9 shows that among the metal salts of cyclopentylphosphonic acid, the anhydrous calcium salt (CaCPP) stands out in almost every category of nucleation performance. While CaCPP induces physical property enhancements to a similar extent as a branched alkylphosphonic acid salt (specifically, calcium t-butylphosphonate monohydrate ("CaTBP")), the significantly higher polymer crystallization temperature (T_{c}) and faster kinetics (lower T_{1/2}) can allow larger real-world cycle time reductions and a greater ability to "overnucleate" or "pigment level" pigmented PP systems.

### EXAMPLE 9

This example demonstrates the production of polyethylene polymer compositions according to the invention and the improved properties exhibited by injection molded articles made from such polymer compositions.

The injection molded articles were made using Sclair 2908 HDPE from Nova Chemicals. The polymer is reported to have a density of 961 kg/m³ and a melt flow index of 7.0 dg/min. The granular resin was ground into a powder prior to compounding with the additives described below.

The samples were made by mixing the ground HDPE resin with 1000 ppm of the indicated nucleating agent and 500 ppm of zinc stearate. The nucleating agent used in each of Samples 9B-9G is identified in Table 10 below. The combined ingredients were high-intensity mixed on a Henschel mixer.

Each resulting mixture was compounded using a Leistritz ZSE-18 twin screw extruder. The extruder was purged with Sclair 2908 HDPE resin before each sample. The temperature profile for all zones was set from 155 °C to 165 °C; and the temperature of the die was 155 °C. The screw speed was set at 500 rpm, and the feed rate was 3.5 kg/hr. The polymer strands were transferred to a water bath after extruding the first 200 g of material. The cooled polymer strands were cut to granular size with a standard pelletizer.

Thermal properties of the polymer specimens were measured by differential scanning calorimetry (DSC) in similar fashion to that described in Example 6. In particular, polymer T_{c} was measured on the DSC by heating the specimen from 30 °C to 220 °C at 20 °C/min, holding the specimen at 220 °C for 2 minutes, then cooling the specimen to 30 °C at a rate of 20 °C/min. For kinetics measurements, however, the crystallization half-time was not measured due to the unique crystallization behaviors of HDPE. Thus, for relative comparisons of nucleation kinetics, a "time to peak T_{c}" was measured. This value was again measured on the DSC by heating the specimen to 200 °C at 20 °C/min and holding temperature for 2 minutes to eliminate any thermal history. The specimen was then cooled to 130 °C at a rate of 35 °C/min, then cooled at a rate of 1 °C/min down to 100 °C. The time measurement was started when the sample reached 130 °C and finished when the peak T_{c} was reached. The resulting time interval was recorded as the "time to peak T_{c}."

Each compounded sample was molded into ISO shrinkage plaques in accordance with ISO 294 using a 55-ton Arburg injection molder. The mold has a dual cavity, and the plaque dimensions were 60.0 mm in length, 60.0 mm in width and 2.0 mm in height. The temperature of the throat was 40 °C. The first four zones of the barrel were set at 210 °C, and the last zone was set at 230 °C. The mold temperature was set at 40 °C. The total cycle time was 40-45 seconds. The resulting ISO shrinkage plaques were submitted for measurement of plaque shrinkage in the machine direction (MD) and transverse direction (TD).

**Table 10. Polymer crystallization temperature (T_{c}) and time to peak T_{c} of Samples 9A-9G.**

| **Sample** | **Nucleating Agent** | **T_{c} (°C)** | **Time to Peak T_{c} (min.)** |
|---|---|---|---|
| 9A | -- | 122.63 | 7.37 |
| 9B | CaTBP | 123.73 | 6.27 |
| 9C | CaCPP | 125.13 | 4.87 |
| 9D | LiCPP | 124.62 | 5.38 |
| 9E | NaCPP | 123.18 | 6.82 |
| 9F | MgCPP | 123.37 | 6.63 |
| 9G | ZnCPP | 122.89 | 7.11 |

**Table 11. Machine direction and transverse direction flexural modulus and machine direction and transverse direction shrinkage measured from ISO shrinkage plaques.**

| **Sample** | **MD Flex Modulus (MPa)** | **TD Flex Modulus (MPa)** | **MD Shrinkage (%)** | **TD Shrinkage (%)** |
|---|---|---|---|---|
| 9A | 979 | 1008 | 1.98 | 1.81 |
| 9B | 804 | 1387 | 1.52 | 0.28 |
| 9C | 848 | 1302 | 1.83 | 0.55 |
| 9D | 1031 | 1030 | 2.24 | 2.05 |
| 9E | 878 | 1175 | 1.29 | 0.54 |
| 9F | 929 | 1155 | 1.33 | 0.76 |
| 9G | 816 | 1284 | 1.51 | 0.45 |

The results in Table 10 show that CaCPP provides the highest crystallization temperature and fastest kinetics of crystallization for polyethylene in injection molded parts, similar to the effects observed in polypropylene. Advantages in cycle time reduction can be realized, as well as "leveling" effects in the presence of nucleating pigments (e.g., talc) that may otherwise lead to problems due to the differential shrinkage such nucleating pigments can cause. Table 11 shows that the anhydrous calcium cyclopentylphosphonate (CaCPP) results in a preferential alignment of the crystalline PE lamellae, as indicated by the higher MD shrinkage relative to the TD shrinkage. This orientation, in which the PE crystalline lamellae grow preferentially in the TD direction of these parts, results in a very high TD modulus. This orientation can be desirable in circular, center-gated injection molded parts. CaCPP (Sample 9C) induces the highest TD modulus within the class of metal salts of cyclopentylphosphonic acid tested.

The use of the terms "a" and "an" and "the" and similar referents in the context of describing the subject matter of this application (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the subject matter of the application and does not pose a limitation on the scope of the subject matter unless otherwise claimed. No language in the specification should be construed as indicating any non-claimed element as essential to the practice of the subject matter described herein.

Preferred embodiments of the subject matter of this application are described herein, including the best mode known to the inventors for carrying out the claimed subject matter. Variations of those preferred embodiments may become apparent to those of ordinary skill in the art upon reading the foregoing description. The inventors expect skilled artisans to employ such variations as appropriate, and the inventors intend for the subject matter described herein to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the present disclosure unless otherwise indicated herein or otherwise clearly contradicted by context.

## Claims

1. A polymer composition comprising:
(a) a polyolefin polymer; and
(b) a salt of cyclopentylphosphonic acid.

2. The polymer composition of claim 1, wherein the polyolefin polymer is selected from the group consisting of polypropylene polymers, polyethylene polymers, and mixtures thereof.

3. The polymer composition of claim 2, wherein the polypropylene polymer is selected from the group consisting of polypropylene homopolymers, polypropylene random copolymers, polypropylene impact copolymers, and mixtures thereof.

4. The polymer composition of claim 3, wherein the polypropylene polymer is selected from the group consisting of polypropylene homopolymers, polypropylene random copolymers, and mixtures thereof.

5. The polymer composition of claim 1, wherein the polyolefin polymer is a polyethylene polymer, preferably wherein the polyethylene polymer has a density of 930 kg/m³ to 970 kg/m³.

6. The polymer composition of claim 1, wherein the salt of cyclopentylphosphonic acid comprises one or more cations selected from the group consisting of Group 1 element cations, Group 2 element cations, and Group 12 element cations.

7. The polymer composition of claim 6, wherein the salt of cyclopentylphosphonic acid comprises a Group 1 element cation.

8. The polymer composition of claim 7, wherein the salt of cyclopentylphosphonic acid is dilithium cyclopentylphosphonate or disodium cyclopentylphosphonate.

9. The polymer composition of claim 6, wherein the salt of cyclopentylphosphonic acid comprises a Group 2 element cation.

10. The polymer composition of claim 9, wherein the salt of cyclopentylphosphonic acid comprises a calcium cation or a magnesium cation.

11. The polymer composition of claim 10, wherein the salt of cyclopentylphosphonic acid comprises a calcium cation, preferably wherein the salt of the cyclopentylphosphonic acid is anhydrous calcium cyclopentylphosphonate.

12. The polymer composition of claim 6, wherein the salt of cyclopentylphosphonic acid comprises a Group 12 cation, preferably wherein the salt of cyclopentylphosphonic acid is zinc cyclopentylphosphonate.

13. The polymer composition of claim 1, wherein the salt of cyclopentylphosphonic acid is present in the polymer composition in an amount of 50 parts-per-million to 2,000 parts-per-million, based on the total weight of the polymer composition.

## Patentansprüche

1. Polymerzusammensetzung, umfassend:
(a) ein Polyolefin-Polymer; und
(b) ein Salz von Cyclopentylphosphonsäure.

2. Polymerzusammensetzung nach Anspruch 1, wobei das Polyolefin-Polymer ausgewählt ist aus der Gruppe, bestehend aus Polypropylen-Polymeren, Polyethylen-Polymeren und Gemischen davon.

3. Polymerzusammensetzung nach Anspruch 2, wobei das Polypropylen-Polymer ausgewählt ist aus der Gruppe, bestehend aus Polypropylen-Homopolymeren, zufälligen Polypropylen-Copolymeren, schlagzähen Polypropylen-Copolymeren und Gemischen davon.

4. Polymerzusammensetzung nach Anspruch 3, wobei das Polypropylen-Polymer ausgewählt ist aus der Gruppe, bestehend aus Polypropylen-Homopolymeren, zufälligen Polypropylen-Copolymeren und Gemischen davon.

5. Polymerzusammensetzung nach Anspruch 1, wobei das Polyolefin-Polymer ein Polyethylen-Polymer ist, vorzugsweise wobei das Polyethylen-Polymer eine Dichte von 930 kg/m³ bis 970 kg/m³ aufweist.

6. Polymerzusammensetzung nach Anspruch 1, wobei das Salz von Cyclopentylphosphonsäure ein oder mehrere Kationen umfasst, die ausgewählt sind aus der Gruppe, bestehend aus Kationen eines Elements der Gruppe 1, Kationen eines Elements der Gruppe 2 und Kationen eines Elements der Gruppe 12.

7. Polymerzusammensetzung nach Anspruch 6, wobei das Salz von Cyclopentylphosphonsäure ein Kation eines Elements der Gruppe 1 umfasst.

8. Polymerzusammensetzung nach Anspruch 7, wobei das Salz von Cyclopentylphosphonsäure Dilithiumcyclopentylphosphonat oder Dinatriumcyclopentylphosphonat ist.

9. Polymerzusammensetzung nach Anspruch 6, wobei das Salz von Cyclopentylphosphonsäure ein Kation eines Elements der Gruppe 2 umfasst.

10. Polymerzusammensetzung nach Anspruch 9, wobei das Salz von Cyclopentylphosphonsäure ein Calciumkation oder ein Magnesiumkation umfasst.

11. Polymerzusammensetzung nach Anspruch 10, wobei das Salz von Cyclopentylphosphonsäure ein Calciumkation umfasst, vorzugsweise wobei das Salz von Cyclopentylphosphonsäure anhydrisches Calciumcyclopentylphosphonat ist.

12. Polymerzusammensetzung nach Anspruch 6, wobei das Salz von Cyclopentylphosphonsäure ein Kation der Gruppe 12 umfasst, vorzugsweise wobei das Salz von Cyclopentylphosphonsäure Zinkcyclopentylphosphonat ist.

13. Polymerzusammensetzung nach Anspruch 1, wobei das Salz von Cyclopentylphosphonsäure in der Polymerzusammensetzung in einer Menge von 50 Teilchen pro Million bis 2000 Teilchen pro Million, bezogen auf das Gesamtgewicht der Polymerzusammensetzung, vorhanden ist.

## Revendications

1. Composition polymère comprenant :
(a) un polymère de polyoléfine ; et
(b) un sel d'acide cyclopentylphosphonique.

2. Composition polymère selon la revendication 1, ledit polymère de polyoléfine étant choisi dans le groupe constitué par les polymères de polypropylène, les polymères de polyéthylène et leurs mélanges.

3. Composition polymère selon la revendication 2, ledit polymère de polypropylène étant choisi dans le groupe constitué par les homopolymères de polypropylène, les copolymères aléatoires de polypropylène, les copolymères résistant aux chocs de polypropylène et leurs mélanges.

4. Composition polymère selon la revendication 3, ledit polymère de polypropylène étant choisi dans le groupe constitué par les homopolymères de polypropylène, les copolymères aléatoires de polypropylène et leurs mélanges.

5. Composition polymère selon la revendication 1, ledit polymère de polyoléfine étant un polymère de polyéthylène, de préférence ledit polymère de polyéthylène présentant une masse volumique de 930 kg/m³ à 970 kg/m³.

6. Composition polymère selon la revendication 1, ledit sel d'acide cyclopentylphosphonique comprenant un ou plusieurs cations choisis dans le groupe constitué par les cations d'éléments du groupe 1, les cations d'éléments du groupe 2 et les cations d'éléments du groupe 12.

7. Composition polymère selon la revendication 6, ledit sel d'acide cyclopentylphosphonique comprenant un cation d'élément du groupe 1.

8. Composition polymère selon la revendication 7, ledit sel d'acide cyclopentylphosphonique étant le cyclopentylphosphonate de dilithium ou le cyclopentylphosphonate de disodium.

9. Composition polymère selon la revendication 6, ledit sel d'acide cyclopentylphosphonique comprenant un cation d'élément du groupe 2.

10. Composition polymère selon la revendication 9, ledit sel d'acide cyclopentylphosphonique comprenant un cation calcium ou un cation magnésium.

11. Composition polymère selon la revendication 10, ledit sel d'acide cyclopentylphosphonique comprenant un cation calcium, ledit sel d'acide cyclopentylphosphonique étant de préférence du cyclopentylphosphonate de calcium anhydre.

12. Composition polymère selon la revendication 6, ledit sel d'acide cyclopentylphosphonique comprenant un cation du groupe 12, ledit sel d'acide cyclopentylphosphonique étant de préférence le cyclopentylphosphonate de zinc.

13. Composition polymère selon la revendication 1, ledit sel d'acide cyclopentylphosphonique étant présent dans la composition polymère en une quantité de 50 parties par million à 2 000 parties par million, par rapport au poids total de la composition polymère.
